# EUROPEAN PATENT APPLICATION

(11) **EP 4 506 489 A1**
(43) Date of publication of application: **12.02.2025**
(21) Application number: 23784101.0
(22) Date of filing: 24.02.2023
(51) Int. Cl.: C25B 1/04, C25B 11/081, C25B 11/054, C25B 11/067, C25B 11/031

(54) **NANO-MATERIAL WITH NOBLE METAL SINGLE ATOMS DISPERSED ON SURFACE OF NON-NOBLE METAL SUBSTRATE AND PREPARATION METHOD AND USE OF NANO-MATERIAL**

(30) Priority: 08.04.2022 CN 202210369875
(71) Applicant: QINGDAO BOLIU INNOVATION TECHNOLOGY CO., LTD, Qingdao, Shandong 266061 (CN)
(72) Inventor: SUN, Xiaoming, Beijing 100029 (CN); DUAN, Xinxuan, Beijing 100029 (CN); YANG, Guotao, Beijing 100029 (CN); LIU, Wei, Beijing 100029 (CN); SHA, Qihao, Beijing 100029 (CN); LI, Tianshui, Beijing 100029 (CN); KUANG, Yun, Beijing 100029 (CN)
(74) Representative: Gille Hrabal Partnerschaftsgesellschaft mbB Patentanwälte
(86) International application number: PCT/CN2023/078137
(87) International publication number: WO 2023/193537

(57) **Abstract**

The present invention belongs to the technical field of inorganic advanced nanomaterials, and particularly relates to a nanomaterial with noble metal single atoms dispersed on a surface of a non-noble metal substrate, and a preparation method and use thereof. The nanomaterial includes: a non-noble metal substrate and noble metal with single atoms dispersed on a surface of the non-noble metal substrate; and surfaces of the single atoms of the noble metal are coordinated with halogen and oxygen simultaneously. The substrate of the material of the present invention has a large specific surface area and a large electrochemical active area, and the single atom dispersion of the noble metal makes influence of a surface coordination environment on an electronic structure and a catalytic activity of a catalyst obvious, thereby having a higher catalytic activity. A noble metal surface coordination structure of the present invention may be regulated and controlled by a synthesis temperature, acidity and alkalinity, a reaction time and a range of an electrodeposition voltage; a hydroxide ion and the halogen are simultaneously coordinated with the noble metal, exhibiting an unsaturated coordination characteristic of pentacoordinate; and doping the substrate with reducing metal ions may increase a single atom loading capacity, achieve directional anchoring of the single atoms, and improve an activity of anodic oxygen evolution and cathodic hydrogen evolution of seawater electrolysis materials.

## Description

### TECHNICAL FIELD

The present invention belongs to the technical field of inorganic advanced nanomaterials, and particularly relates to a nanomaterial with noble metal single atoms dispersed on a surface of a non-noble metal substrate, and a preparation method and use thereof.

### BACKGROUND

With the increase of human demand for energy, existing conventional energy resources in the world are seriously insufficient, and environmental problems caused by burning traditional fossil fuels are also becoming increasingly serious. Therefore, development of renewable new energy is extremely urgent. Currently, solar energy, wind energy, biomass energy, water energy, hydrogen energy, and the like are widely regarded as renewable clean energy. Among them, hydrogen energy has attracted much attention due to its characteristics of lightweight, non-toxic, high calorific value, large storage capacity, recyclability and the like. At present, electrolyzing water is an important way to prepare hydrogen. However, freshwater resources available to human are extremely limited, with a total storage capacity of less than 1% of the total water on earth. Therefore, simply using pure water to produce hydrogen is not enough to meet human needs for the hydrogen energy. Seawater resources on earth are extremely abundant, with 70.8% of a total surface area of the earth covered by seawater. If hydrogen may be produced by electrolyzing seawater, it can not only achieve effective utilization of seawater resources, but also solve increasingly severe energy problem and environmental problem.

A catalyst is the core of electrolysis and plays a decisive role in electrolysis voltage, efficiency, and the like. At present, an anodic reaction requires a large amount of overvoltage, and in seawater electrolysis, catalyst selectivity and stability problems caused by the presence of a large number of chloride ions urgently need to be solved. A concentration of the chloride ions in seawater is about 0.5 mol/L. A theoretical potential of a chloride ion oxidation reaction (1.36 V) is not significantly different from that of oxygen evolution (1.23 V), but a chlorine evolution reaction is a 2e⁻ reaction, which is more favorable in terms of kinetics and makes chlorine evolution more likely to occur, affecting reaction selectivity; and meanwhile, the chloride ions are prone to reacting with the catalyst and corroding the catalyst, affecting the stability of the catalyst and shortening its service life. Accordingly, it is of great significance to develop a highly active, selective and stable electrolyzing seawater catalyst. At present, a lot of work is focused on avoiding adsorption of chlorine ions to prevent or reduce the occurrence of a chlorine evolution reaction, which usually also reduces an oxygen evolution activity. This "shielding" phenomenon of chloride ion adsorption will fail at high voltage and cannot be applied in industrial electrolysis under a working condition of a large current density.

In order to solve the above problems, the present invention is proposed.

### SUMMARY

The present invention designs a nanomaterial with noble metal single atoms dispersed on a surface of non-noble metal. A characteristic of high dispersion of noble metal enables the nanomaterial to be sensitive to a surrounding environment while reducing the amount of the noble metal, and surface adsorption of chloride ions may regulate and control a structure of the material and affect the performance.

The noble metal is loaded on the surface of the non-noble metal. On the one hand, the noble metal is not prone to desorption due to strong adsorption of the chloride ions, so that the noble metal has high selectivity for an oxygen evolution reaction; and on the other hand, the noble metal protects a non-noble metal substrate from being corroded. Substrate non-noble metal has a strong interaction with single-atom noble metal, so that the noble metal is not prone to falling off and has a high stability.

A first aspect of the present invention provides a nanomaterial with noble metal single atoms dispersed on a surface of a non-noble metal substrate, and the nanomaterial includes: a non-noble metal substrate and noble metal in single atom dispersion on a surface of the non-noble metal substrate; and surfaces of the single atoms of the noble metal are coordinated with chlorine and oxygen simultaneously.

The oxygen coordinated on the surfaces of the single atoms of the noble metal exists in a form of an oxygen-containing functional group. The oxygen-containing functional group may be a hydroxide ion.

Single atom dispersion of the noble metal means that the noble metal is evenly distributed on the surface of the non-noble metal substrate, there is no metal-metal bond or metal-oxygen-metal bond between the noble metal, and the noble metal is connected with the non-noble metal substrate through chemical bonds.

Preferably, halogen is selected from: one or more of chlorine, bromine, fluorine, and iodine.

Preferably, the noble metal is selected from: one or more of iridium, ruthenium, gold, platinum, rhodium, palladium, silver, and osmium. For example, the noble metal is selected from: one, two, three, four, five or more of iridium, ruthenium, gold, platinum, rhodium, palladium, silver, and osmium.

Preferably, the non-noble metal substrate is selected from: one or more of non-noble metal hydroxide, non-noble metal oxide, non-noble metal sulfide, non-noble metal phosphide, and non-noble metal selenide. When the non-noble metal substrate is sulfide, phosphide, or selenide, the surfaces of the noble metal atoms are coordinated with sulfur, phosphorus, or selenium, while being coordinated with halogen or oxygen.

Preferably, non-noble metal in the non-noble metal substrate is selected from: one or more of iron, cobalt, nickel, aluminum, manganese, cerium, vanadium, zinc, copper, strontium, indium, and cadmium.

Preferably, the non-noble metal substrate is doped with reducing metal ions, and the single atoms of the noble metal are selectively anchored with the reducing metal ions.

Preferably, the reducing metal ions are selected from: one or more of divalent iron ions, divalent manganese ions, and divalent cobalt ions. Specifically, the single atoms of the noble metal are selectively anchored above the reducing metal ions.

Preferably, the nanomaterial further includes a conductive carrier, and the non-noble metal substrate is loaded on the conductive carrier.

More preferably, the conductive carrier is selected from: foam metal, carbon paper or a carbon cloth, etc. The foam metal may be selected from foam iron, foam nickel, etc.

A second aspect of the present invention provides a preparation method of the nanomaterial with the noble metal single atoms dispersed on the surface of the non-noble metal substrate as described in the first aspect, and the preparation method is a chemical precipitation method, and includes:
dispersing a non-noble metal substrate in water, dropwise adding a dilute solution of a water-soluble noble metal precursor and base thereto to obtain a mixed solution, reacting same for 4-120 hours at 10-95°C while stirring, performing solid-liquid separation, washing solid, and drying to obtain the nanomaterial, wherein
in the dilute solution of the water-soluble noble metal precursor and the base, a concentration of the water-soluble noble metal precursor is in a range from 0.001 mmol/L to 200 mmol/L, and a concentration of a hydroxide ion is in a range from 0.5 mmol/L to 1000 mmol/L. The water-soluble noble metal precursor contains halogen elements. **In** chemical deposition, the key step is to control the concentrations of the water-soluble noble metal precursor and the hydroxide ion in the dilute solution so as to ensure simultaneous coordination of the hydroxide ion and the halogen elements. For example, the water-soluble noble metal precursor may be one or more of chloride, bromide, or fluoride. When the water-soluble noble metal precursor contains two or three different halides, two or three different halogen elements may be made to coordinate simultaneously on surfaces of single atoms of noble metal.

Preferably, when the non-noble metal substrate is doped with reducing metal ions, in the chemical precipitation method, oxygen dissolved in water needs to be eliminated in advance.

Preferably, when the non-noble metal substrate is non-noble metal hydroxide, a preparation method thereof is as follows: co-precipitating an alkali liquor and a water-soluble non-noble metal precursor solution, performing crystallization and solid-liquid separation, and drying solid to obtain the non-noble metal hydroxide;
when the non-noble metal substrate is non-noble metal oxide, a preparation method thereof is as follows: directly calcining a non-noble metal hydroxide to obtain the non-noble metal oxide; and
when the non-noble metal substrate is non-noble metal sulfide, non-noble metal phosphide or non-noble metal selenide, a preparation method thereof is selected from any one of the following two methods:
   method 1: respectively placing non-noble metal hydroxide in a sulfur-containing substance solution, a selenium-containing substance solution or a phosphorus-containing substance solution for hydrothermal to obtain the corresponding non-noble metal sulfide, non-noble metal selenide or non-noble metal phosphide; and
   method 2: simultaneously placing non-noble metal hydroxide with a sulphur-containing substance, a selenium-containing substance or a phosphorus-containing substance respectively in a tube furnace for calcination to obtain the corresponding non-noble metal sulfide, non-noble metal selenide or non-noble metal phosphide.

More preferably, the above alkali liquor is a mixed solution of sodium hydroxide and sodium carbonate, a concentration of the sodium hydroxide is in a range from 0.004 mol/L to 0.3 mol/L, and a concentration of the sodium carbonate is in a range from 0.0001 mol/L to 0.1 mol/L; the water-soluble non-noble metal precursor solution is nitrate, sulfate, or chloride corresponding to non-noble metal, with a concentration ranging from 0.002 mol/L to 0.3 mol/L; and a reaction condition for co-precipitation of the alkali liquor and the water-soluble non-noble metal precursor solution is: pH=8-12, a temperature is in a range from 20°C to 80°C, and a reaction time is in a range from 6 hours to 48 hours.

Preferably, in the above method 1:
the hydrothermal condition is as follows: a volume of the solution is 36 mL, a temperature is in a range from 100°C to 120°C, and the time is in a range from 3 hours to 6 hours; a concentration of each of a sulfide solution, a phosphide solution or a selenide solution is 3-10 mmol/36 mL; and a calcining condition is as follows: a temperature is in a range from 300°C to 500°C, and the time is in a range from 2 hours to 5 hours.

Preferably, in the above method 2, the calcining condition is as follows: a temperature is in a range from 300°C to 500°C, and the time is in a range from 2 hours to 5 hours.

A third aspect of the present invention provides another preparation method of a nanomaterial with noble metal single atoms dispersed on a surface of a non-noble metal substrate, the nanomaterial further includes a conductive carrier, and the non-noble metal substrate is loaded on the conductive carrier;
the preparation method is an electrodeposition method and specifically is as follows:
preparing an electrolyte solution mainly with a water-soluble noble metal precursor and base, and performing electrochemical deposition by using a conductive carrier loaded with a non-noble metal substrate as a working electrode, an electrodeposition voltage being in a range from -1.2 V to 1.2 V, wherein
in the electrolyte solution, a concentration of the water-soluble noble metal precursor is in a range from 0.001 mmol/L to 1000 mmol/L, a concentration of a hydroxide ion is in a range from 0.1 mol/L to 6 mol/L, and the water-soluble noble metal precursor contains halogen elements;
preferably, the water-soluble noble metal precursor and the base are prepared into the electrolyte solution;
preferably, the conductive carrier loaded with the non-noble metal substrate is combined with a carbon rod and a reference electrode to form a three-electrode system; and
preferably, in the electrolyte solution, a concentration of the water-soluble noble metal precursor is in a range from 0.001 mmol/L to 10 mmol/L.

In the electrodeposition method, the key step is to control the concentrations of the water-soluble noble metal precursor and the hydroxide ion (base) in the electrolyte solution and a range of the electrodeposition voltage so as to ensure simultaneous coordination of the hydroxide ion and the halogen elements. For example, the water-soluble noble metal precursor may be one or more of chloride, bromide, or fluoride. When the water-soluble noble metal precursor contains two or three different halides, two or three different halogen elements may be made to coordinate simultaneously on surfaces of single atoms of noble metal.

Preferably, when the non-noble metal substrate is doped with reducing metal ions, in the electrodeposition method, dissolved oxygen in the electrolyte solution needs to be eliminated in advance.

More preferably, the specific method for eliminating the dissolved oxygen in the electrolyte solution is as follows: heating deionized water or an electrolyte solution for an experiment at 80°C, introducing nitrogen at the same time, and obtaining, after 1 hour, deionized water or an electrolyte solution from which the dissolved oxygen is removed.

Preferably, when the non-noble metal substrate is doped with reducing metal ions, the reducing metal ions need to be added to participate in a reaction when preparing the non-noble metal substrate.

Preferably, the number of cycles for electrodeposition is in a range from 3 to 20.

More preferably, a preparation method of the conductive carrier loaded with the non-noble metal substrate is as follows:
when the non-noble metal substrate is non-noble metal hydroxide, a preparation method thereof is as follows: performing hydrothermal, crystallization, washing and drying on a conductive carrier, urea and a water-soluble non-noble metal precursor solution to obtain a conductive carrier loaded with the non-noble metal hydroxide; or using an electrodeposition method to prepare the conductive carrier loaded with the non-noble metal hydroxide;
when the non-noble metal substrate is non-noble metal oxide, a preparation method thereof is as follows: directly calcining the conductive carrier loaded with the non-noble metal hydroxide to obtain a conductive carrier loaded with the non-noble metal oxide; and
when the non-noble metal substrate is non-noble metal sulfide, non-noble metal phosphide or non-noble metal selenide, a preparation method thereof is selected from any one of the following two methods:
   method 1: respectively placing the conductive carrier loaded with the non-noble metal hydroxide in a sulfur-containing substance solution, a selenium-containing substance solution or a phosphorus-containing substance solution for hydrothermal and then performing calcination to obtain a corresponding conductive carrier loaded with the non-noble metal sulfide, conductive carrier loaded with the non-noble metal selenide or conductive carrier loaded with the non-noble metal phosphide; and
   method 2: simultaneously placing the conductive carrier loaded with the non-noble metal hydroxide with a sulphur-containing substance, a selenium-containing substance or a phosphorus-containing substance respectively in a tube furnace for calcination to obtain a corresponding conductive carrier loaded with the non-noble metal sulfide, conductive carrier loaded with the non-noble metal selenide or conductive carrier loaded with the non-noble metal phosphide.

The phosphorus-containing substance herein may optionally be selected from a suitable form, such as sodium hypophosphite or sodium phosphite, and a phosphorus element.

The sulfur-containing substance herein may optionally be selected from a suitable form, such as thiourea, and a sulfur element.

The selenium-containing substance herein may optionally be selected from a suitable form, such as a selenium element.

A method for preparing the conductive carrier loaded with the non-noble metal hydroxide through an electrodeposition method herein is as follows:
performing electrochemical deposition preparation in an electrochemical workstation by taking a conductive carrier as a working electrode, a carbon rod as a counter electrode, and a saturated calomel electrode as a reference electrode, wherein an electrolyte solution is an aqueous solution of non-noble metal.

Preferably, during a hydrothermal reaction of the above conductive carrier, urea and water-soluble non-noble metal precursor solution:
in the solution, a concentration of the urea is 3-10 mmol/36 mL, the water-soluble non-noble metal precursor solution is nitrate, sulphate or chloride corresponding to the non-noble metal, and the concentrations thereof are all 1 mmol/36 mL; and a hydrothermal condition is as follows: a temperature is in a range from 100°C to 120°C, and a reaction time is in a range from 8 hours to 12 hours.

Preferably, in the above method 1:
the hydrothermal condition is as follows: a volume of the solution is 36 mL, a temperature is in a range from 100°C to 120°C, the time is in a range from 3 hours to 6 hours, and a concentration of each of a sulfide solution, a phosphide solution or a selenide solution is 3-10 mmol/36 mL; and a calcining condition is as follows: a temperature is in a range from 300°C to 550°C, and the time is in a range from 2 hours to 5 hours.

In the present invention, by regulating and controlling the types of raw materials, any combination of four types of a non-noble metal substrate type, a non-noble metal type, a noble metal type, and a halogen type may be achieved, and any combination of elements in the non-noble metal and any combination of elements in the noble metal may be achieved.

The chemical deposition method and the electrodeposition method are also both suitable for preparing any of the above materials.

A fourth aspect of the present invention provides use of the nanomaterial according to any one of the first aspect as an electrode for electrolyzed water, and halide is added into an electrolyte solution of the electrolyzed water to improve performance of the electrolyzed water of the nanomaterial.

The electrolyte solution of the electrolyzed water contain base.

Preferably, the performance includes: activity, selectivity and stability.

Preferably, the nanomaterial may serve as both an anode and a cathode for the electrolyzed water.

The meaning that the nanomaterial may serve as both the anode and the cathode for the electrolyzed water contains the following solutions:
the nanomaterial serves alone as the anode for the electrolyzed water;
the nanomaterial serves alone as the cathode for the electrolyzed water;
the same nanomaterial serves as both the anode and the cathode for the electrolyzed water simultaneously; and
the different nanomaterials serve as the anode and the cathode for the electrolyzed water respectively.

Preferably, the halide is selected from: one or more of chloride, bromide and fluoride. Halogens (fluorine, bromine, chloride and iodine) in the halide may be further coordinated with noble metal single atoms, so as to regulate and control a coordination environment and an electronic structure of the nanomaterial, thereby improving stability of an electrode material.

The base herein may be selected from one or more of sodium hydroxide, potassium hydroxide, etc. The halide is selected from: one or more of sodium chloride, potassium chloride, sodium fluoride, potassium fluoride, sodium bromide, potassium bromide, potassium iodide, sodium iodide, etc.

A fifth aspect of the present invention provides use of the nanomaterial according to any one of the first aspect as an electrode for electrolyzing seawater.

Preferably, the nanomaterial may serve as both an anode and a cathode for the electrolyzing seawater.

The meaning that the nanomaterial may serve as both the anode and the cathode for the electrolyzing seawater contains the following solutions:
the nanomaterial serves alone as the anode for the electrolyzing seawater;
the nanomaterial serves alone as the cathode for the electrolyzing seawater;
the same nanomaterial serves as both the anode and the cathode for the electrolyzing seawater simultaneously; and
the different nanomaterials serve as the anode and the cathode for the electrolyzing seawater respectively.

The above technical solutions may be freely combined without contradiction.

Compared to the prior art, the present invention has the following beneficial effects:
(1) in the material of the present invention, the single atom dispersion of the noble metal makes the material have characteristics of a large specific surface area and a large electrochemical active area, thereby having a higher catalytic activity. Similarly, the single atom dispersion of the noble metal makes influence of a surface coordination environment on an electronic structure and a catalytic activity of a catalyst obvious. The noble metal surface coordination structure of the present invention may be regulated and controlled by a synthesis temperature, a potential of hydrogen, a reaction time, and a range of an electrodeposition voltage (if the electrodeposition method is used). In the material of the present invention, the hydroxide ion and the halogens (chlorine, bromine, fluorine and iodine) are simultaneously coordinated with the noble metal, and have an unsaturated coordination characteristic of pentacoordinate, which improves activity of anodic oxygen evolution and cathodic hydrogen evolution of a seawater electrolytic material.
(2) The material of the present invention may be used for anodic oxygen evolution and cathodic hydrogen evolution of the electrolyzing seawater. In a reaction process of the electrolyzing seawater, the halogens (chlorine, bromine, fluorine and iodine) in the electrolyte solution are adsorbed on the surfaces of the single atoms of the noble metal and are not prone to desorption, and thus metal-halogen bonds are formed, which further regulates and controls the noble metal coordination environment and the electronic structure, and improves the reaction activity, selectivity (inhibiting the occurrence of chlorine evolution side reactions) and material stability of the anodic oxygen evolution and the cathodic hydrogen evolution.
(3) The single atoms of the noble metal of the catalyst of the present invention are tightly bonded to the non-noble metal substrate via chemical bonds. Thus, the catalytic activity of the material of the present invention is not simply a simple addition of a non-noble metal substrate catalyst and the noble metal. There is a strong interaction between the noble metal and the non-noble metal substrate, the noble metal is not prone to falling off, the stability is improved, electron clouds are redistributed, and the activity of the material of the present invention is further improved. In a preferable implementation solution, when the non-noble metal substrate is the sulfide, the phosphide, or the selenide, the surfaces of the noble metal atoms are coordinated with sulfur, phosphorus, or selenium, while being coordinated with halogen or oxygen, so as to form a strong interaction with the non-noble metal substrate.
(4) The noble metal in the material is in single atom dispersion, so that a content of the noble metal is greatly reduced, thereby reducing the cost of the catalyst and facilitating large-scale commercialization.
(5) In particular, according to the experiment of Comparative Example 1, it is found that the electrolyzed water/electrolyzing seawater oxygen evolution performance of the material of the present invention is closely related to a local coordination structure of the single atoms of the noble metal, and the noble metal has the best performance when being coordinated with both the halogen and the oxygen-containing functional groups.
(6) In a preferred solution, the introduction of the reducing metal ions (for example, ferrous iron, divalent manganese ions or divalent cobalt ions) into the non-noble metal substrate (hydrotalcite laminate) of the present invention has the following beneficial effects:
   1) after final loading of the noble metal, it is unexpectedly found that not only can single atom dispersion of the noble metal be achieved, but also the single atom loading capacity of the noble metal is improved.

In an existing material, in order to achieve single atom dispersion of the noble metal on the substrate, the concentration of the noble metal can only be reduced. In the final material, a mass content of the noble metal is generally less than 0.5%. Therefore, the single atom dispersion and high loading capacity of the noble metal are a dilemma.

Therefore, the present invention solves the above dilemma by introducing the reducing metal ions into the hydrotalcite laminate, which can protect the single atom dispersion of the noble metal and increase the loading capacity of the noble metal.

The reason may be that the reducing metal ions can maintain the characteristic of single atom dispersion in the laminate, and can selectively anchor noble metal ions. Therefore, even if the addition amount of the noble metal is increased, there is no need to worry about the aggregation of the noble metal to form particles, and the noble metal can still be anchored by the reducing metal ions to maintain a single dispersion state.
2) In addition, reducing ferrous iron, or divalent manganese ions, or divalent cobalt ions are introduced into the laminate to selectively reduce the noble metal. The strong reductibility enhances the interaction between the single atom noble metal and the hydrotalcite substrate, making the noble metal more firmly anchored and less prone to falling off, thereby improving the stability of the single atom catalyst.
3) The reducing ferrous iron, or divalent manganese ions, or divalent cobalt ions in the laminate can reduce a valence state of the noble metal, making the noble metal have higher activity and stability when being used for the electrolyzed water and the electrolyzing seawater.

The specific reason is that the interaction between the noble metal and the reducing metal ions is enhanced, the noble metal is anchored more tightly and is not prone to falling off, and the stability is improved; and the reducing metal ions make the noble metal have the lower initial valence state and the better activity. However, in an existing noble metal loading material, since the noble metal is fixed to the surface of the substrate by the action of M-O-M, the valence state of the noble metal is high, and the stability is poor.

Taking Ru as an example: if the laminate has reducing ferrous iron, Ru and Fe²⁺ act, Fe²⁺ gives electrons to Ru to cause redox and electron gain and loss, and therefore such acting force is stronger; and if there is no reducing ferrous iron in the laminate, and there is only ferric iron, there is no redox acting force between Ru and Fe³⁺, which are connected only through Ru-O-M (M represents Fe³⁺ and other laminate metal ions), resulting in the much weaker acting force.

4) The noble metal single atoms are dispersed in ferrous iron/manganese doped hydrotalcite to form an M-Fe²⁺ or M-Mn²⁺ catalytic pair. At the same time, the interaction between the noble metal and Fe²⁺ enables the electron cloud density around Fe to be changed, and the performance become better. The activity of the hydrotalcite laminate is thus activated.

### BRIEF DESCRIPTION OF THE DRAWINGS

FIG. 1 is a transmission electron microscopy (TEM) of an iridium/cobalt iron hydroxide material obtained in Embodiment 1.
FIG. 2 is an X-ray diffraction (XRD) spectrum of an iridium/cobalt iron hydroxide material obtained in Embodiment 1.
FIG. 3 is a selected area electron diffraction (SAED) diagram of an iridium/cobalt iron hydroxide material obtained in Embodiment 1.
FIG. 4 is an element distribution mapping of an iridium/cobalt iron hydroxide material obtained in Embodiment 1.
FIG. 5 is a scanning transmission electron microscopy (STEM) of an iridium/cobalt iron hydroxide material obtained in Embodiment 1.
FIG. 6 is an X-ray photoelectron spectroscopy (XPS) of an iridium/cobalt iron hydroxide material obtained in Embodiment 1.
FIG. 7 is an X-ray absorption near-edge spectrum of an iridium/cobalt iron hydroxide material obtained in Embodiment 1.
FIG. 8 is an X-ray absorption fine structure spectrum of an iridium/cobalt iron hydroxide material obtained in Embodiment 1.
FIG. 9 is fitting of an X-ray absorption fine structure spectrum of an iridium/cobalt iron hydroxide material obtained in Embodiment 1 and a schematic structural diagram of single atom iridium.
FIG. 10 is an oxygen evolution polarization curve diagram of an iridium/cobalt iron hydroxide material, a cobalt iron hydroxide material, or commercial iridium dioxide in Application Example 1 in a 6 mol/L NaOH solution.
FIG. 11 is a polarization curve diagram of an iridium/cobalt iron hydroxide material in Application Example 1 in a 6 mol/L NaOH+2.8 mol/L NaCl solution and an oxygen evolution polarization curve thereof in a 6 mol/L NaOH solution.
FIG. 12 is a constant voltage test curve of an iridium/cobalt iron hydroxide material in Application Example 1 with the addition of a 0.5 mol/L NaCl solution in a 1 mol/L NaOH solution neutralization test.
FIG. 13 is a high current stability test curve of an iridium/cobalt iron hydroxide material of Embodiment 1 in real seawater.
FIG. 14 is in-situ synchrotron radiation characterization of an iridium/cobalt iron hydroxide material in Application Example 1.
FIG. 15 is oxygen evolution polarization curves of an iridium/cobalt iron hydroxide material in Application Example 1 in NaOH+NaF, NaOH+NaBr and NaOH.
FIG. 16 is an X-ray absorption fine structure spectrum of an iridium chloride/cobalt iron hydroxide material in Comparative Example 1.
FIG. 17 is an oxygen evolution polarization curve diagram of an iridium chloride/cobalt iron hydroxide material in Comparative Example 1 in a 6 mol/L NaOH solution.
FIG. 18 is an X-ray absorption fine structure spectrum of an iridium oxygen/cobalt iron hydroxide material in Comparative Example 2.
FIG. 19 is oxygen evolution polarization curve diagrams of an iridium oxygen/cobalt iron hydroxide material in Comparative Example 2 and an iridium/cobalt iron hydroxide material in Embodiment 1 in a 6 mol/L NaOH solution.
FIG. 20 is a scanning electron microscopy (SEM) of an iridium/nickel iron hydroxide array material in Embodiment 2.
FIG. 21 is an oxygen evolution polarization curve diagram of an iridium/nickel iron hydroxide array material in Application Example 2 or a nickel iron hydroxide array material obtained in step (1) of Embodiment 2 in a 6 mol/L NaOH+2.8 mol/L NaCl solution.
FIG. 22 is a transmission electron microscopy (TEM) of a rhodium/cobalt hydroxide material in Embodiment 3.
FIG. 23 is an oxygen evolution polarization curve diagram of a rhodium/cobalt hydroxide material or a cobalt hydroxide material in Application Example 3 in a 1 mol/L NaOH solution.
FIG. 24 is an oxygen evolution polarization curve diagram of a rhodium/cobalt hydroxide material in Application Example 3 in a 1 mol/L NaOH+0.5 mol/L NaCl solution or a 1 mol/L NaOH solution.
FIG. 25 is oxygen evolution polarization curve diagrams of a rhodium/nickel iron hydroxide material in Application Example 4 in a 1 mol/L NaOH+0.5 mol/L NaCl solution and a 1 mol/L NaOH solution.
FIG. 26 is oxygen evolution polarization curve diagrams of a gold/nickel-iron sulfide material and a nickel iron sulfide material in Application Example 5 in a 6 mol/L NaOH+2.8 mol/L NaCl solution.
FIG. 27 is a transmission electron microscopy of a gold particle/nickel-iron sulfide material in Comparative Example 3.
FIG. 28 is an oxygen evolution polarization curve diagram of a gold particle/nickel-iron sulfide material in Comparative Application Example 3 or a gold/nickel-iron sulfide material in Embodiment 5 in a 6 mol/L NaOH+2.8 mol/L NaCl solution.
FIG. 29 is a scanning electron microscopy of a platinum/nickel-cobalt-iron sulfide material in Embodiment 6.
FIG. 30 is oxygen evolution polarization curves of a platinum/nickel-cobalt-iron sulfide material in Application Example 6 in 6 mol/L NaOH+2.8 mol/L NaCl (dashed line) and 6 mol/L NaOH (solid line) solutions.
FIG. 31 is a stability curve of a platinum/nickel-cobalt-iron sulfide material in Application Example 6 at a current density of 100 milliamperes/square centimeter in 6 mol/L NaOH+2.8 mol/L NaCl.
FIG. 32 is oxygen evolution polarization curves of a palladium/nickel-cobalt-zinc-iron-aluminum sulfide material in Application Example 7 in 6 mol/L NaOH+2.8 mol/L NaCl (dashed line) and 6 mol/L NaOH (solid line) solutions.
FIG. 33 is a scanning electron microscopy of a ruthenium/nickel-iron-vanadium phosphide material in Embodiment 8.
FIG. 34 is an X-ray diffraction spectrum of a ruthenium/nickel-iron-vanadium phosphide material in Embodiment 8.
FIG. 35 is oxygen evolution polarization curve diagrams of a ruthenium/nickel-iron-vanadium phosphide material (dashed line) and a nickel-iron-vanadium phosphide material (solid line) in Embodiment 8 in a 1 mol/L NaOH+0.5 mol/L NaCl (dashed line) solution.
FIG. 36 is oxygen evolution polarization curves of a gold/nickel-iron-manganese phosphide material in Embodiment 9 in 1 mol/L NaOH+0.5 mol/L NaCl (dashed line) and 1 mol/L NaOH (solid line) solutions.
FIG. 37 is hydrogen evolution polarization curves of a platinum/cobalt phosphide material and a cobalt phosphide material in Embodiment 10 in 1 mol/L NaOH+0.5 mol/L NaCl (dashed line).
FIG. 38 is hydrogen evolution polarization curves of a silver/nickel-cobalt-indium phosphide material and a nickel-cobalt-indium phosphide material in Embodiment 11 in 1 mol/L NaOH+0.5 mol/L NaCl (dashed line).
FIG. 39 is oxygen evolution polarization curves of a platinum/nickel-cobalt-cerium selenide material (dashed line) and a nickel-cobalt-cerium selenide material (solid line) in Embodiment 12 in 6 mol/L NaOH+2.8 mol/L NaCl (dashed line).
FIG. 40 is oxygen evolution polarization curve diagrams of a platinum oxygen/nickel-cobalt-cerium selenide material in Comparative Application Example 4 and a platinum/nickel-cobalt-cerium selenide material in Embodiment 12 in a 6 mol/L NaOH+2.8 mol/L NaCl solution.
FIG. 41 is a scanning electron microscopy of a ruthenium/cobalt selenide material in Embodiment 13.
FIG. 42 is oxygen evolution polarization curves of a ruthenium/cobalt selenide material in Application Example 13 in 6 mol/L NaOH+2.8 mol/L NaCl (dashed line) and 6 mol/L NaOH (solid line) solutions.
FIG. 43 is oxygen evolution polarization curves of iridium/nickel iron selenide in Application Example 14 in 6 mol/L NaOH+2.8 mol/L NaCl (dashed line) and 6 mol/L NaOH (solid line) solutions.
FIG. 44 is oxygen evolution polarization curve diagrams of an iridium platinum/nickel-iron-vanadium selenide material and a nickel-iron-vanadium selenide material in Application Example 15 in a 6 mol/L NaOH+2.8 mol/L NaCl solution.
FIG. 45 is hydrogen evolution polarization curve diagrams of an iridium platinum/nickel-iron-vanadium selenide material and a nickel-iron-vanadium selenide material in Application Example 15 in a 6 mol/L NaOH+2.8 mol/L NaCl solution.
FIG. 46 is oxygen evolution polarization curve diagrams of an osmium/nickel-cobalt-cadmium selenide material and a nickel-cobalt-cadmium selenide material in Application Example 16 in a 6 mol/L NaOH+2.8 mol/L NaCl solution.
FIG. 47 is a scanning electron microscopy (SEM) of an iridium/cobaltosic oxide material in Embodiment 17.
FIG. 48 is an X-ray diffraction diagram of an iridium/cobaltosic oxide material in Embodiment 17.
FIG. 49 is oxygen evolution polarization curve diagrams of an iridium/cobaltosic oxide material and a cobaltosic oxide material in Application Example 17 in a 6 mol/L NaOH+2.8 mol/L NaCl solution.
FIG. 50 is oxygen evolution polarization curve diagrams of a ruthenium palladium/nickel-iron-copper-strontium oxide material and a nickel-iron-copper-strontium oxide material in Application Example 18 in a 6 mol/L NaOH+2.8 mol/L NaCl solution.
FIG. 51 is hydrogen evolution polarization curve diagrams of a ruthenium palladium/nickel-iron-copper-strontium oxide material and a nickel-iron-copper-strontium oxide material in Application Example 18 in a 6 mol/L NaOH+2.8 mol/L NaCl solution.
FIG. 52 is oxygen evolution polarization curve diagrams of a gold/nickel-cobalt-iron sulfide material and a nickel-cobalt-iron sulfide material in Application Example 19 in a 6 mol/L NaOH solution.
FIG. 53 is oxygen evolution polarization curve diagrams of a gold/nickel-cobalt-iron sulfide material in Application Example 19 in a 6 mol/L NaOH solution and a 6 mol/L NaOH+2.8 mol/L NaCl solution.
FIG. 54 is oxygen evolution polarization curve diagrams of a gold/nickel-cobalt-iron sulfide material in Application Example 19 in a 6 mol/L NaOH solution and a 6 mol/L NaOH+2.0 mol/L NaBr solution.
FIG. 55 is an in-situ Raman characterization diagram of a gold/nickel-cobalt-iron sulfide material in Application Example 19 in a 6 mol/L NaOH+2.0 mol/L NaBr solution.
FIG. 56 is oxygen evolution polarization curve diagrams of a gold/nickel-cobalt-iron sulfide material in Application Example 19 in a 6 mol/L NaOH solution and a 6 mol/L NaOH+2.0 mol/L NaF solution.
FIG. 57 is a scanning transmission electron microscopy of an iridium ruthenium/nickel-iron sulfide material in Embodiment 20.
FIG. 58 is a synchrotron radiation characterization spectrum of an iridium ruthenium/nickel-iron sulfide material in Embodiment 20.
FIG. 59 is hydrogen evolution polarization curve diagrams of iridium ruthenium/nickel-iron sulfide and nickel-iron sulfide materials in Application Example 20 in a 6 mol/L NaOH+2.8 mol/L NaCl solution.
FIG. 60 is hydrogen evolution polarization curve diagrams of iridium ruthenium/nickel-iron sulfide and nickel-iron sulfide materials in Application Example 20 in a 6 mol/L NaOH+2.8 mol/L NaCl solution.
FIG. 61 is oxygen evolution polarization curve diagrams of an iridium platinum/nickel-iron-vanadium phosphide material and a nickel-iron-vanadium phosphide material in Application Example 21 in a 6 mol/L NaOH+2.8 mol/L NaCl solution.
FIG. 62 is hydrogen evolution polarization curve diagrams of an iridium platinum/nickel-iron-vanadium phosphide material and a nickel-iron-vanadium phosphide material in Application Example 21 in a 6 mol/L NaOH+2.8 mol/L NaCl solution.
FIG. 63 is polarization curves of two-electrode full electrolyzed water of an iridium platinum/nickel-iron-vanadium phosphide material in Application Example 21 as a cathode and an anode in a 6 mol/L NaOH+2.8 mol/L NaCl solution.
FIG. 64 is a transmission electron microscopy (TEM) of ruthenium/nickel iron (2+) iron hydrotalcite obtained in Embodiment 22.
FIG. 65 is an element distribution mapping of ruthenium/nickel iron (2+) iron hydrotalcite obtained in Embodiment 22.
FIG. 66 is a scanning transmission electron microscopy (STEM) of ruthenium/nickel iron (2+) iron hydrotalcite obtained in Embodiment 22.
FIG. 67 is an X-ray diffraction (XRD) spectrum of ruthenium/nickel iron (2+) iron hydrotalcite obtained in Embodiment 22.
FIG. 68 is an X-ray photoelectron spectroscopy of ruthenium/nickel iron hydrotalcite of Application Example 22 or ruthenium/nickel iron (2+) iron hydrotalcite obtained in Embodiment 1.
FIG. 69 is hydrogen evolution polarization curve diagrams of a ruthenium/nickel iron (2+) iron hydrotalcite material obtained in Embodiment 22 and commercially available ruthenium dioxide in a 1 mol/L NaOH solution.
FIG. 70 is an oxygen evolution polarization curve diagram of an iridium/nickel manganese (2+) iron hydrotalcite material obtained in Embodiment 23 and Application Example 23 in a 1 mol/L NaOH+0.5 mol/L NaCl solution.
FIG. 71 is hydrogen evolution polarization curve diagrams of a platinum/nickel-cobalt-iron phosphide material and a nickel-cobalt-iron phosphide material obtained in Embodiment 24 and Application Example 24 in a 6 mol/L NaOH solution.
FIG. 72 is hydrogen evolution polarization curve diagrams of a platinum/nickel-cobalt-iron phosphide material obtained in Embodiment 24 and Application Example 24 in a 6 mol/L NaOH+2.8 mol/L NaCl solution and a 6 mol/L NaOH solution.
FIG. 73 is hydrogen evolution polarization curve diagrams of a platinum/nickel-cobalt-iron phosphide material obtained in Embodiment 24 and Application Example 24 in a 6 mol/L NaOH+2 mol/L NaI solution and a 6 mol/L NaOH solution.
FIG. 74 is oxygen evolution polarization curve diagrams of a platinum/nickel-cobalt-iron phosphide material and a nickel-cobalt-iron phosphide material obtained in Embodiment 25 and Application Example 25 in a 6 mol/L NaOH+2.8 mol/L NaCl solution.
FIG. 75 is polarization curves of full electrolyzed water of a two-electrode system consisting of a platinum/nickel-cobalt-iron phosphide material (anode) and commercial iridium/carbon (cathode) obtained in Embodiment 25 and Application Example 25 in a 6 mol/L NaOH+2.8 mol/L NaCl solution.

### DETAILED DESCRIPTION OF THE EMBODIMENTS

The present invention will be further illustrated below through embodiments, but not limited to this embodiment. Experimental methods that do not specify specific conditions in the embodiments may be obtained through commercial channels usually according to conventional conditions and conditions described in a manual, or according to general equipment, materials, reagents, etc. used in conditions recommended by the manufacturer, unless otherwise specified. The raw materials required in following embodiments and comparative examples are all commercially available.

### Embodiment 1-Chemical deposition method

A preparation method of a nanomaterial (iridium/cobalt iron hydroxide) with noble metal single atoms dispersed on a surface of a non-noble metal substrate adopts a chemical deposition method described in the second aspect of the present invention, which is specifically as follows:
step (1) a non-noble metal substrate-cobalt iron hydroxide material was prepared:
preparation of 40 mL of an alkali liquor A: 40 mL of the alkali liquor A was prepared by using 0.48 g of sodium hydroxide and 0.106 g of sodium carbonate with an appropriate amount of deionized water; and
preparation of 40 mL of a salt solution B: 40 mL of the salt solution B was prepared by using 0.291 g of cobalt nitrate and 0.202 g of ferric nitrate with an appropriate amount of deionized water.

The solution A and the solution B were simultaneously dropped to 40 ml of water under high-speed stirring, and pH was maintained at about 8.5 until the dropwise addition of the salt solution B was completed; and stirring was continued for 12 hours, centrifuging was performed to obtain precipitates, and the precipitates were washed with deionized water and ethyl alcohol for three times each, and dried in vacuum at 60°C to obtain the cobalt iron hydroxide material.

Step (2) a nanomaterial was prepared:
1 g of the cobalt iron hydroxide material obtained in step (1) was weighed, 30 mL of deionized water was added, and ultrasound was performed for 2-3 hours until the material was evenly distributed in the water. Preparation of 20 mL of an alkaline dilute solution of iridium chloride: 20 mL of the alkaline dilute solution of iridium chloride was prepared by using 0.6 mg (0.1 mmol/L) of iridium chloride, 0.4 mg (0.5 mmol/L) of sodium hydroxide, and deionized water. Then, under a high-speed stirring condition (500 R/min), the above alkaline dilute solution of the iridium chloride was dropped into the uniformly dispersed cobalt iron hydroxide material, with a drop rate of 5 drops/minute. After dropwise adding, stirring was continued under a heating condition at 95°C for 4 hours, centrifugation was performed to obtain precipitates, and the precipitates were washed with water and ethyl alcohol for three times each, and dried in vacuum at 60°C to obtain a nanosheet (iridium/cobalt iron hydroxide) with iridium single atoms loaded on a surface of cobalt iron bimetallic hydroxide.

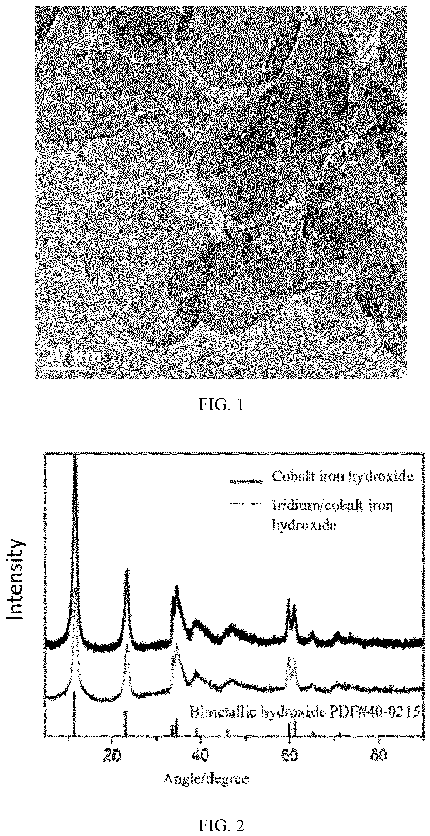

Reference is made to FIG. 1 for a transmission electron microscopy of the obtained iridium/cobalt iron hydroxide. It may be seen from FIG. 1 that the iridium/cobalt iron hydroxide is a hexagonal plate with a diameter of 50-100 nanometers and a thickness of 5-10 nanometers.

Reference is made to FIG. 2 for an XRD spectrum of the obtained iridium/cobalt iron hydroxide. It may be seen that after single atom loading of iridium, a diffraction peak is kept consistent with that of the cobalt iron hydroxide, and if there is no diffraction peak of iridium or iridium oxide, it indicates that no iridium or iridium oxide particles are crystallized in a synthesis process.

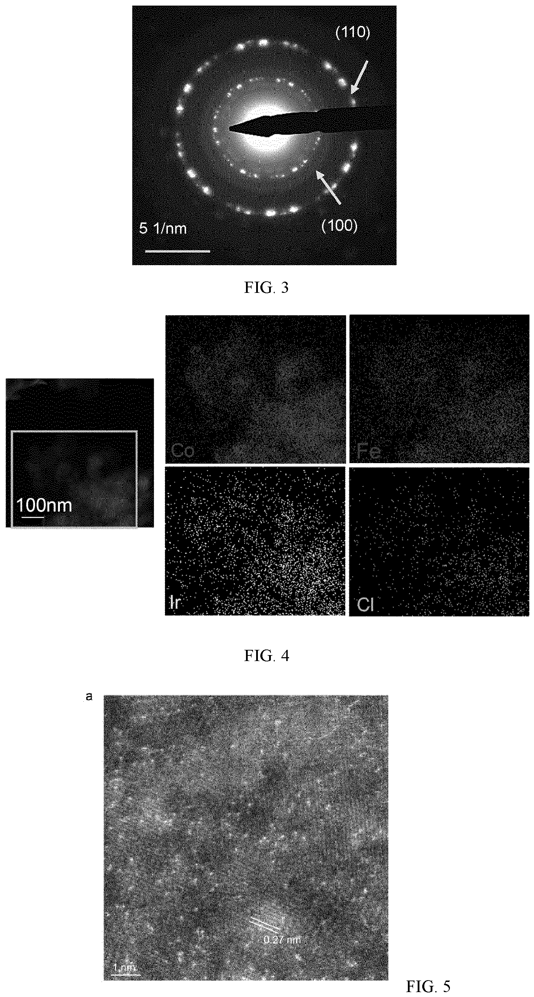

Reference is made to FIG. 3 for a selected area electron diffraction diagram of the obtained iridium/cobalt iron hydroxide. It may be seen from FIG. 3 that diffraction rings of the material are 100 and 110 crystal planes of the bimetallic hydroxide, and there is no diffraction rings of iridium and iridium oxide, which is consistent with the XRD, and also indicates that there is no Ir or iridium oxide particles.

Reference is made to FIG. 4 for element distribution of the obtained iridium/cobalt iron hydroxide, and reference is made to FIG. 5 for its scanning transmission electron microscopy. It may be seen from FIG. 4 that the elements of iridium, cobalt, iron and chlorine in the material are uniformly distributed, and it may be seen in conjunction with the scanning transmission electron microscopy 5 that the iridium single atoms of noble metal are distributed on the surface of the cobalt iron hydroxide.

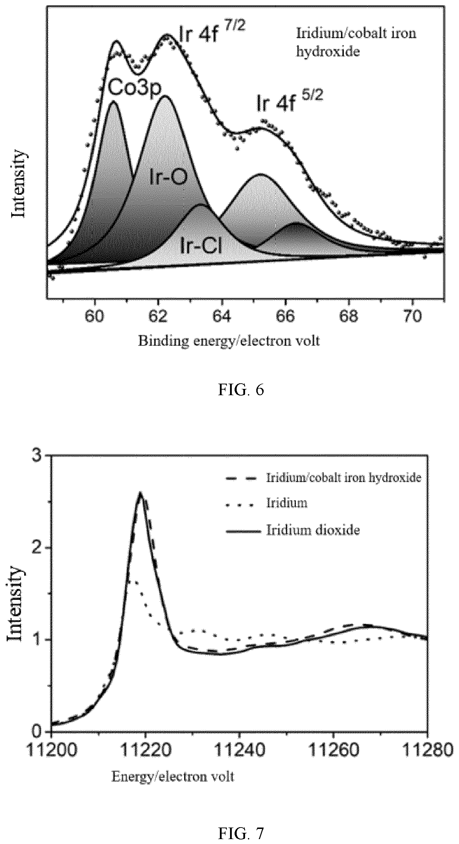

Reference is made to FIG. 6 for an X-ray photoelectron spectroscopy of the obtained iridium/cobalt iron hydroxide, and from binding energy of iridium in FIG. 6, it may be obtained that iridium is in a state of co-coordination of Ir-O and Ir-Cl.

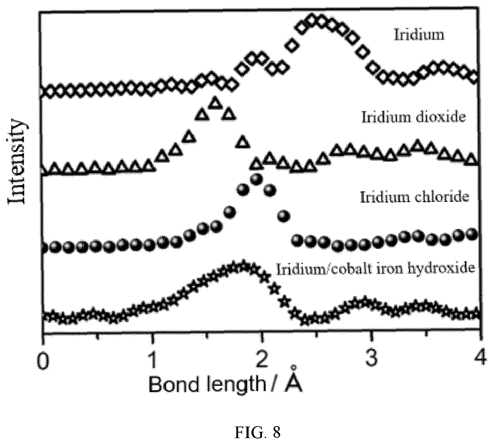

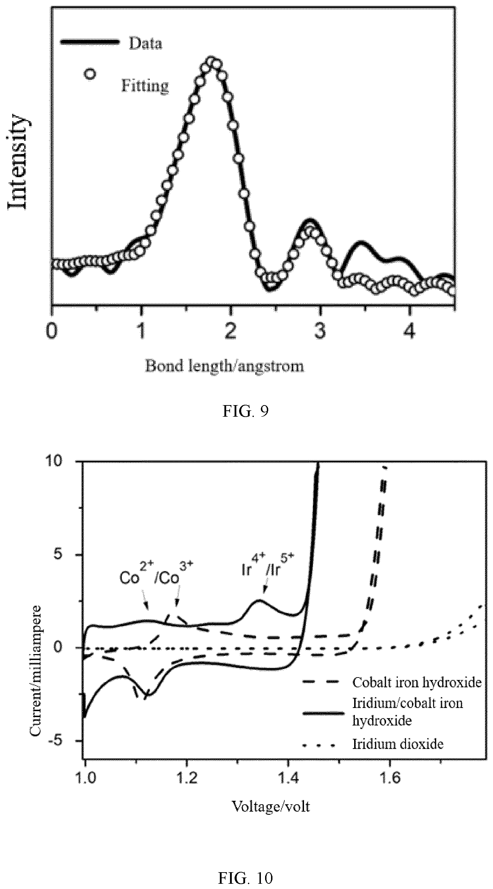

An X-ray near-edge absorption spectrum of the obtained iridium/cobalt-iron hydroxide is shown in FIG. 7. Reference is made to FIG. 8 for an X-ray absorption fine structure spectrum of the iridium/cobalt iron hydroxide. Reference is made to FIG. 9 for fitting of an X-ray absorption fine structure of the iridium/cobalt iron hydroxide. It may be seen from FIG. 7 that the single atom Ir is dispersed on a cobalt iron bimetallic nanosheet, has a valence state close to that of iridium oxide, and has a valence of +4. It may be seen from FIG. 8 and FIG. 9 that the single atom Ir is connected with the cobalt iron bimetallic hydroxide via Ir-O-M, with co-coordination of Ir-O and Ir-Cl on the surface.

### Application Example 1

### First, electrolyzed water performance testing

Electrolyzed water oxygen evolution performance of the iridium/cobalt iron hydroxide of the present invention was tested using a three-electrode system: a reference electrode was a saturated calomel electrode, a counter electrode was a platinum electrode, a working electrode was the iridium/cobalt iron hydroxide material obtained in Embodiment 1, the cobalt iron hydroxide material obtained in step (1) of Embodiment 1, or commercial iridium dioxide, and testing was performed in a 6.0 M sodium hydroxide solution to obtain polarization curves as shown in FIG. 10. It may be seen from FIG. 10 that the iridium/cobalt iron hydroxide material obtained in Embodiment 1 had good electrolyzed water oxygen evolution performance (a solid line in FIG. 10, and a peak potential being 1.428 V), its electrolyzed water oxygen evolution performance was better than that of a cobalt-iron bimetallic hydroxide sheet material (a dashed line in FIG. 10, and a peak potential being 1.554 V), and the peak potential was decreased by 126 mV. Moreover, the electrolyzed water oxygen evolution performance of the nanosheet material of the iridium/cobalt iron hydroxide was far superior to that of commercial iridium dioxide (a dashed line in FIG. 10, and a peak potential being 1.65 V).

### Second, performance testing of electrolytic sodium hydroxide+sodium chloride solution

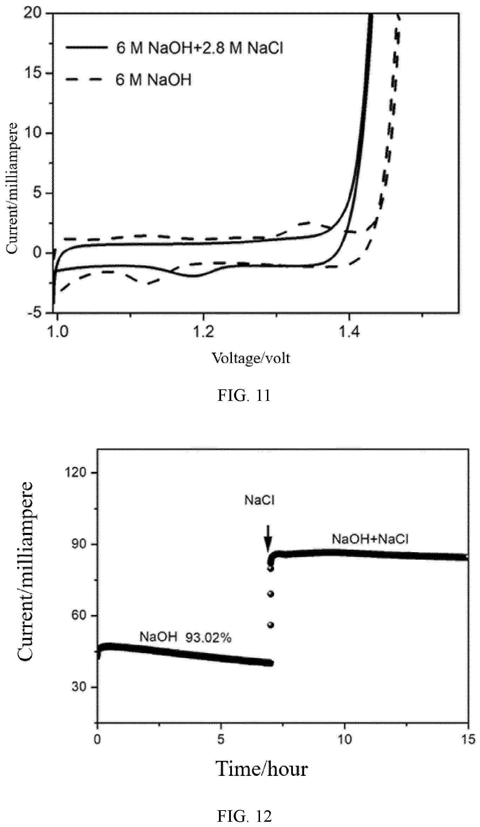

Referring to the first aspect of Application Example 1, under the same three-electrode testing system, sodium chloride was added to an electrolyte solution, that is, the electrolyte solution was changed to 6.0 M sodium hydroxide and 2.8 M sodium chloride, a working electrode was the iridium/cobalt iron hydroxide material obtained in Embodiment 1, and the polarization curves obtained were as shown in FIG. 11. It may be seen from FIG. 11 that for the cobalt iron hydroxide material, the oxygen evolution performance after adding chloride ions was better than that when testing in sodium hydroxide, and a peak potential was decreased by about 50 mV (when testing in sodium hydroxide, the peak potential was 1.428 V; and when testing in sodium hydroxide and sodium chloride, the peak potential was 1.38 V).

The iridium/cobalt iron hydroxide material obtained from Embodiment 1 was used for electrolysis oxygen evolution stability testing, as shown in FIG. 12, it was found that a current density of the material was slowly decayed (decayed to 93.02% of an initial current density within 7 hours) after being tested in 6.0 M sodium hydroxide for 7 hours; and by adding 2.8 M sodium chloride to the electrolyte solution, a current was gradually increased and stabilized at about 80 mA, and OER Faraday efficiency was always greater than 99%.

In addition, after the testing was completed, the electrolyte solution reacted with a starch potassium iodide solution without discoloring, and therefore no chlorine oxidation reaction occurs. It indicates that the material has good activity, stability and OER selectivity when being tested in a solution containing chloride ions.

### Third, oxygen evolution performance testing of electrolyzing seawater

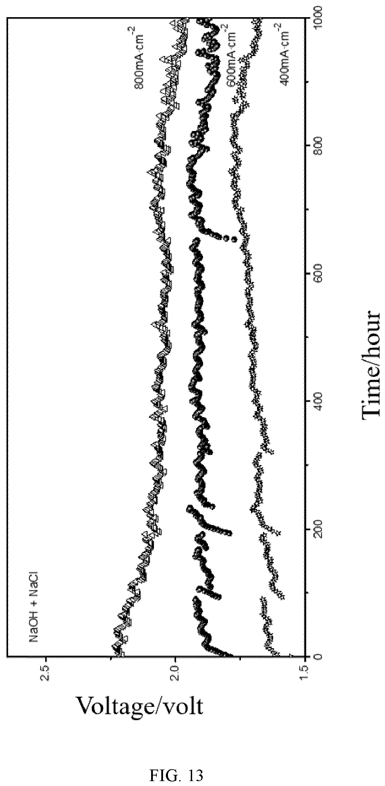

Real electrolyzing seawater oxygen evolution performance of the iridium/cobalt iron hydroxide material in Embodiment 1 was tested using a three-electrode system:
Referring to the first aspect of Application Example 1, a reference electrode was a saturated calomel electrode, a counter electrode was a platinum electrode, a working electrode was the iridium/cobalt iron hydroxide material obtained in Embodiment 1, and an electrolyte solution therein was changed to that: 100 mL of real seawater was taken, 24 g of sodium hydroxide was added, filtering was performed, then a supernatant was taken as the electrolyte solution, and an obtained stability curve of the material is as shown in FIG. 13. It may be seen from FIG. 13 that under a high current density condition at an industrial level (specifically 400 mA/square centimeter, 600 mA/square centimeter, or 800 mA/square centimeter), the material may remain stable for over 1000 hours, indicating that the material has industrial application prospects.

### Fourth, in situ characterization of interaction between the material and chloride ions in an oxygen evolution reaction process

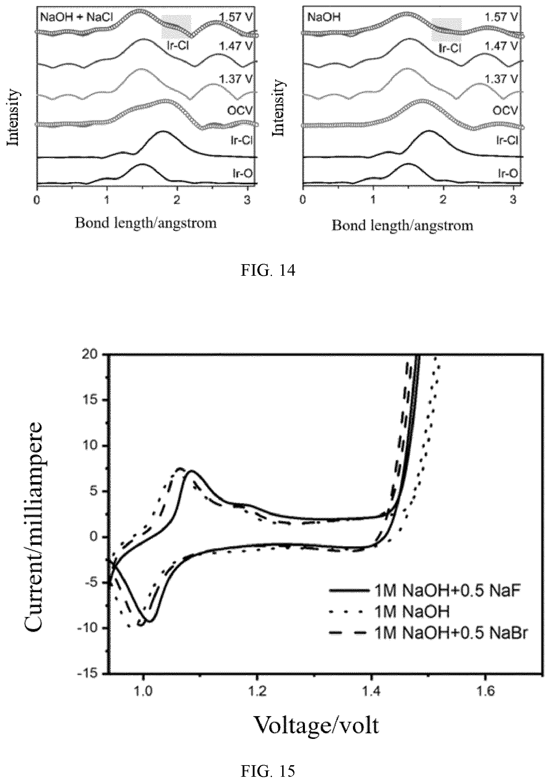

A synchrotron radiation device at the Beijing Institute of High Energy Physics uses a beam line 1W1B and a fluorescence mode, and cooperates with an electrochemical workstation to collect ray absorption spectra of the iridium/cobalt iron hydroxide material at different voltages, as shown in FIG. 14. It may be concluded from FIG. 14 that in the oxygen evolution reaction process, chlorine in the solution was adsorbed on the surface of the iridium, thus regulating and controlling a local coordination structure of the single atom iridium and facilitating occurrence of the oxygen evolution reaction.

### Fifth, other halogen fluoride and bromide being able to also improve the oxygen evolution performance of the single atom

Referring to the first aspect of Application Example 1, under the same three-electrode testing system, sodium fluoride or sodium bromide was added to the electrolyte solution, that is, the electrolyte solution was changed to 1.0 M sodium hydroxide, or 1.0 M sodium hydroxide and 0.5 M sodium fluoride, or the electrolyte solution was changed to 1.0 M sodium hydroxide and 0.5 M sodium bromide, a working electrode was the iridium/cobalt iron hydroxide material obtained in Embodiment 1, and the polarization curves obtained were as shown in FIG. 15.

It may be concluded from FIG. 15 that adding fluoride ions to a testing solution may advance the peak potential (1.46 V) of the iridium/cobalt iron hydroxide material to 1.424 V, which is beneficial for the material to catalyze hydrolysis and oxygen evolution; and adding bromide ions to the testing solution may advance the peak potential of the iridium/cobalt iron hydroxide to 1.41 V, which is beneficial for the material to catalyze hydrolysis and oxygen evolution.

During electrolysis, fluorine elements or bromine elements in the electrolyte solution can perform coordination with noble metal single atoms. In the material in the electrolysis process, iridium atoms are simultaneously coordinated with oxygen, chlorine and fluorine; or the iridium atoms are simultaneously coordinated with oxygen, chlorine and bromine.

### Comparative Example 1-Chemical deposition method

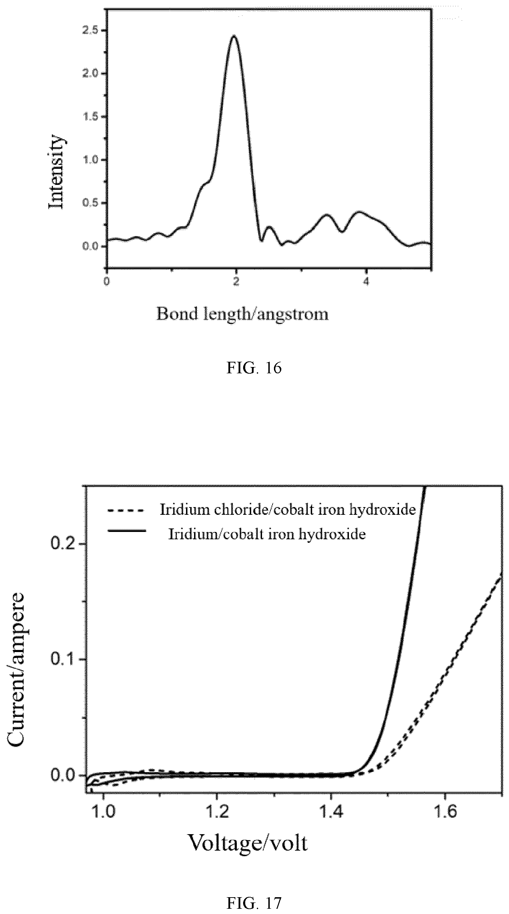

Referring to the method in Embodiment 1, in step (2): 0.16 mg of sodium hydroxide (0.2 mmol/L) and 5 mg of iridium chloride were added. Specifically, 20 mL of an iridium chloride solution was prepared from 5 mg of iridium chloride, 0.16 mg of sodium hydroxide, and deionized water. The material finally obtained is iridium chloride/cobalt iron hydroxide. Reference is made to FIG. 16 for an X-ray absorption fine structure spectrum of the obtained material. It may be concluded from FIG. 16 that the surface of the iridium single atom in the material is only coordinated by chlorine and is connected with a laminate of the cobalt iron hydroxide through Ir-O-M, where M is an iron or cobalt atom.

### Comparative Application Example 1

Referring to the seawater electrolysis testing method in Application Example 1, real Electrolyzing seawater oxygen evolution performance of the iridium/cobalt iron hydroxide material in Embodiment 1 was tested using a three-electrode system:
a reference electrode was a saturated calomel electrode, a counter electrode was a platinum electrode, and a working electrode was the iridium chloride/cobalt iron hydroxide (dashed line) in Comparative Example 1. Where the electrolyte solution was 6.0 M sodium hydroxide and 2.8 M sodium chloride. Reference is made to FIG. 17 for obtained results, from which it may be concluded that when the current density reaches 10 mA/square centimeter, an overpotential of the iridium chloride/cobalt iron hydroxide is 1.441 V, which is about 15 mV higher than that of the iridium/cobalt iron hydroxide (solid line) in Embodiment 1. Therefore, when the iridium chloride/cobalt iron hydroxide in Comparative Example 1 is used for seawater electrolysis, its activity is lower than that of the iridium/cobalt iron hydroxide in Embodiment 1. The results show that the electrolyzed water/electrolyzing seawater oxygen evolution performance of the material is closely related to a local coordination structure of the single atoms of the noble metal, and the noble metal has the best performance when being coordinated with both the halogen and the oxygen-containing functional groups.

### Comparative Example 2-Chemical deposition method

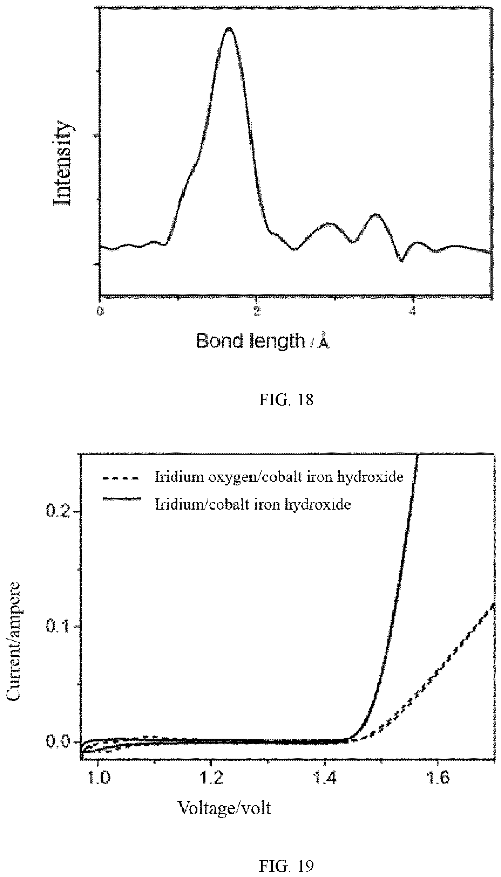

Referring to the method in Embodiment 1, in step (2): 1000 mg of sodium hydroxide (1250 mmol/L) and 5 mg of iridium chloride were added. Specifically, 20 mL of an iridium chloride solution was prepared from 5 mg of iridium chloride, 1000 mg of sodium hydroxide, and deionized water. The material finally obtained is iridium oxygen/cobalt iron hydroxide. Reference is made to FIG. 18 for an X-ray absorption fine structure spectrum of the obtained material. It may be concluded from FIG. 18 that the surface of the iridium single atom in the material is only coordinated by oxygen without an Ir-O-Ir bond and an Ir-Ir bond to maintain a single atom state, and is connected with a laminate of the cobalt iron hydroxide through Ir-O-M, where M is an iron or cobalt atom. The reason why the surface of the iridium single atom is only coordinated with oxygen and is free of coordination with chlorine is that excessive OH in the solution regulates and controls the coordination of an Ir precursor in a dilute solution, so that Cl is all substituted to form full oxygen coordination.

### Comparative Application Example 2

Referring to the seawater electrolysis testing method in Application Example 1, a working electrode was changed to the iridium oxygen/cobalt iron hydroxide (dashed line) in Comparative Example 2. A reference electrode was a saturated calomel electrode, and a counter electrode was a platinum electrode. Where the electrolyte solution was changed to 6.0 M sodium hydroxide and 2.8 M sodium chloride. Reference is made to FIG. 19 for obtained results, from which it may be concluded that when the current density reaches 10 mA/square centimeter, an overpotential of the iridium oxygen/cobalt iron hydroxide is 1.455 V, which is about 15 mV higher than that of the iridium/cobalt iron hydroxide (solid line) in Embodiment 1. Therefore, when the iridium chloride/cobalt iron hydroxide in Comparative Example 1 is used for seawater electrolysis, its activity is lower than that of the iridium/cobalt iron hydroxide in Embodiment 1. The results show that the electrolyzed water/electrolyzing seawater oxygen evolution performance of the material is closely related to a local coordination structure of the single atoms of the noble metal, and the noble metal has the best performance when being coordinated with both the halogen and the oxygen-containing functional groups.

### Embodiment 2-Electrodeposition method

A preparation method of a nanomaterial with noble metal single atoms dispersed on a surface of a non-noble metal substrate adopts an electrodeposition method described in the third aspect of the present invention, which is specifically as follows:
step (1) a conductive carrier loaded with a non-noble metal substrate - foam nickel loaded with nickel iron hydroxide were prepared:
   0.6 g of urea, 0.121 g of ferric nitrate, 0.174 g of nickel nitrate, 0.037 g of ammonium fluoride and deionized water were prepared into 36 mL of a solution, the solution was poured into 40 mL of a reactor, washed foam nickel with a size of 3*4 square centimeters was soaked into the solution, the solution was put into an oven, a reaction temperature was 100°C, the time was 12 hours, and hydrothermal, crystallization, washing, and drying were performed to obtain the foam nickel loaded with the nickel iron hydroxide, namely, a nickel iron hydroxide array material.
Step (2) 50 mL of an electrolyte solution was prepared: 50 mL of the electrolyte solution was prepared from 2.0 g of sodium hydroxide (1 mol/L) and 2.98 mg of iridium chloride (0.1 mmol/L) with an appropriate amount of deionized water.
Step (3) electrodeposition was performed: a three-electrode system was used in the electrolyte solution obtained in (2): (1) the obtained foam nickel loaded with the nickel iron hydroxide was a working electrode, a saturated calomel electrode was a reference electrode, a carbon rod was a counter electrode, a linear voltammetry was used, and parameters were: a voltage range was from -1.2 V to -0.5 V, a scanning direction was reverse, a scanning speed was 0.005 V/s, and the number of cycles was 10. The material was obtained after electrodeposition.
Step (4) the material obtained in step (3) was washed with deionized water and ethyl alcohol for three times each, and dried in a vacuum drying oven at 60°C, so as to obtain an iridium/nickel iron hydroxide array material, that is, iridium single atoms were dispersed on the surface of the nickel iron hydroxide, and the foam nickel was used as a carrier.

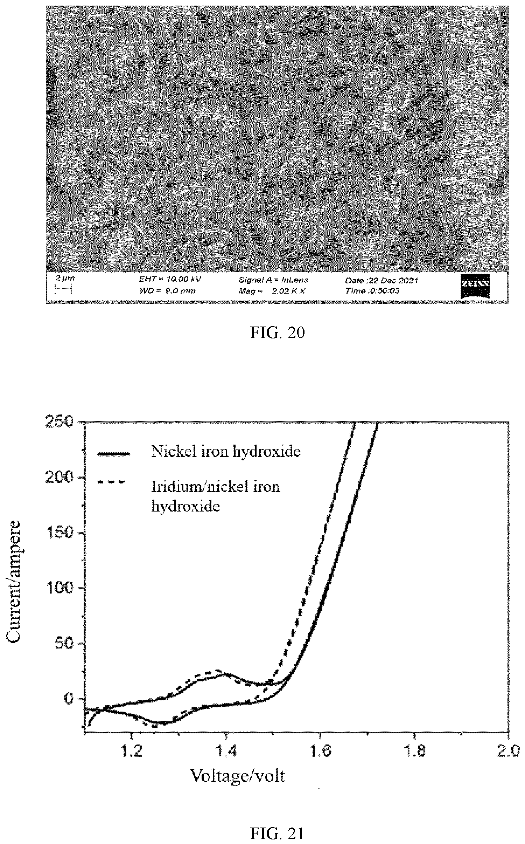

Reference is made to FIG. 20 for a scanning electron microscopy of the obtained iridium/nickel iron hydroxide array material. It may be seen from the figure that an iridium/nickel iron hydroxide array is composed of hexagonal nanosheets with a diameter of 50-100 nanometers and a thickness of 5-10 nanometers, without obvious particles.

### Application Example 2

Referring to the third aspect (electrolyzing seawater oxygen evolution performance testing) of Application Example 1, testing was performed under the same three-electrode testing system: a reference electrode was a saturated calomel electrode, a counter electrode was a platinum electrode, a working electrode was the iridium/nickel iron hydroxide array material obtained in Embodiment 2 or the nickel iron hydroxide array material obtained from step (1) in Embodiment 2, and an electrolyte solution therein was changed to that: 100 mL of real seawater was taken, 24 g of sodium hydroxide was added, filtering was performed, and then a supernatant was taken as the electrolyte solution. Reference is made to FIG. 21 for electrolyzing seawater anodic catalytic performance of the iridium/nickel iron hydroxide array material obtained in Embodiment 2, and an overpotential at a current density of 100 mA/square centimeter was 1.564 V, which was 50 mV smaller than that of the nickel iron hydroxide array material. This indicates that the iridium/nickel iron hydroxide array material also has a promoting effect on seawater electrolysis.

### Embodiment 3-Chemical deposition method

A preparation method of a nanomaterial (rhodium/cobalt hydroxide material) with noble metal single atoms dispersed on a surface of a non-noble metal substrate adopts a chemical deposition method described in the second aspect of the present invention, which is specifically as follows:
referring to the method in Embodiment 1, when preparing 40 mL of the salt solution B in step (1), the mass of cobalt nitrate was changed to 0.436 g, without adding iron nitrate, and the alkali liquor was changed to 0.48 g of sodium hydroxide. Finally, a cobalt hydroxide material was obtained in step (1).

Preparation of 1 mL of the dilute iridium chloride solution in step (2) was changed to preparation of a dilute rhodium chloride solution: 41.2 mg of rhodium chloride (200 mmol/L) and 40 mg of sodium hydroxide (1000 mmol/L).

A reaction condition was: stirring at 10°C for 120 hours. The other reaction conditions remain unchanged referring to the method in Embodiment 1. Finally, a rhodium/cobalt hydroxide material was obtained in step (2).

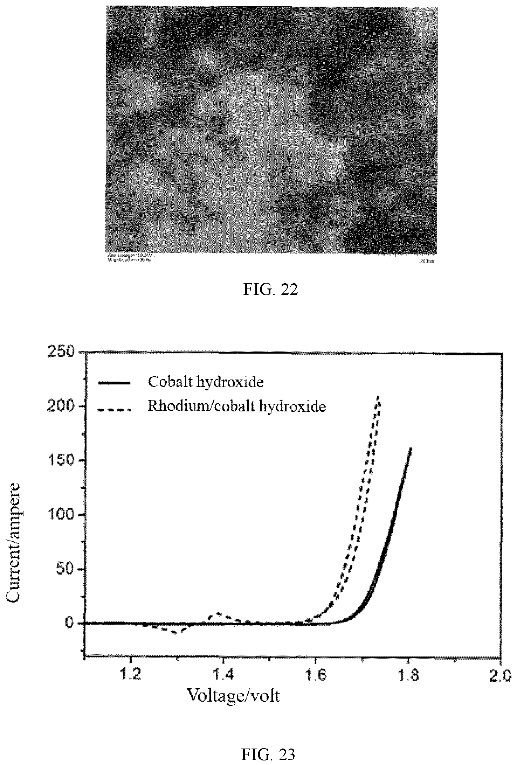

Reference is made to FIG. 22 for a transmission electron microscopy of the rhodium/cobalt hydroxide material, and it may be seen that a material morphology is a flower shape composed of nanosheets with a diameter of 100-200 nanometers, and the surface is smooth without particles.

### Application Example 3

Testing was performed under a three-electrode testing system: a reference electrode was a saturated calomel electrode, a counter electrode was a platinum electrode, and a working electrode was the rhodium/cobalt hydroxide material obtained in Embodiment 3 or the cobalt hydroxide material obtained from step (1) in Embodiment 3.

When an electrolyte solution was 1.0 M sodium hydroxide, reference is made to FIG. 23 for polarization curves of the above two materials. It may be seen from FIG. 23 that compared to the cobalt hydroxide material, the oxygen evolution performance of the rhodium/cobalt hydroxide material is improved after single atom loading of rhodium. Compared to the cobalt hydroxide material, a peak potential of the rhodium/cobalt hydroxide material is 1.575 V, and the peak potential is decreased by 95 mV.

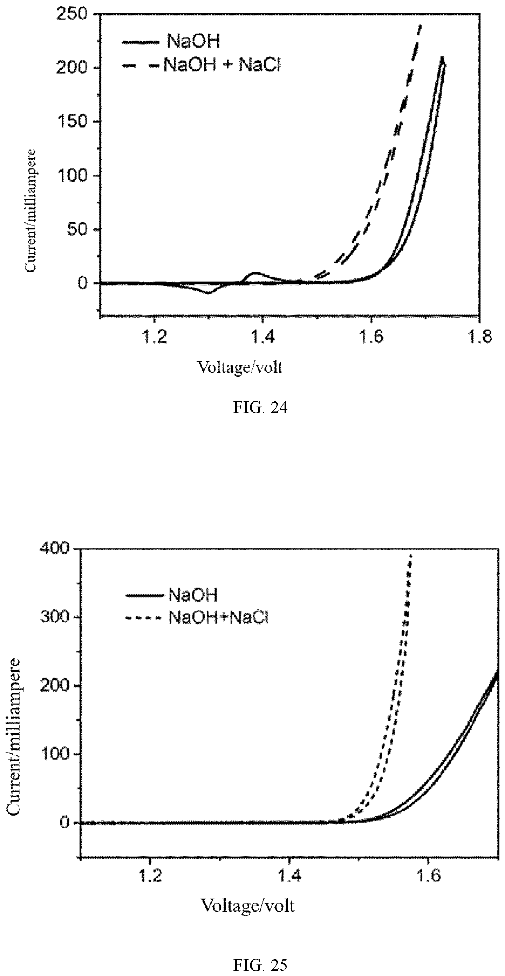

When the electrolyte solution was a solution of 1.0 M sodium hydroxide+0.5 M sodium chloride, the peak potential of the rhodium/cobalt hydroxide material was 1.473 V, which was 102 mV lower than that in pure sodium hydroxide, as shown in FIG. 24. This result indicates that chloride ions in the electrolyte solution (seawater) interact with single atom rhodium, enhancing an oxygen evolution activity of rhodium, and facilitating the progress of the reaction.

### Embodiment 4-Chemical deposition method

A preparation method of a nanomaterial (rhodium/nickel iron hydroxide) with noble metal single atoms dispersed on a surface of a non-noble metal substrate adopts a chemical deposition method described in the second aspect of the present invention, which is specifically as follows:
referring to the method in Embodiment 1, when preparing 40 mL of the salt solution B in step (1), the mass of nickel nitrate was changed to 0.436 g, the mass of iron nitrate was changed to 0.202 g, and the alkali liquor was changed to 0.14 g of sodium hydroxide, and 0.053 g of sodium carbonate.

Preparation of 100 mL of the dilute iridium chloride solution in step (2) was changed to preparation of a dilute rhodium chloride solution (0.001 mmol/L): 0.03 mg of rhodium chloride (0.001 mmol/L) and 40 mg of sodium hydroxide.

The conditions were: 10°C, and 120 hours.

### Application Example 4

Testing was performed under a three-electrode testing system: a reference electrode was a saturated calomel electrode, a counter electrode was a platinum electrode, and a working electrode was the rhodium/nickel iron hydroxide material obtained in Embodiment 4.

When the electrolyte solution was a solution of 1.0 M sodium hydroxide+0.5 M sodium chloride, the peak potential of the rhodium/nickel iron hydroxide material was 1.464 V, which was 57 mV lower than that in pure sodium hydroxide, as shown in FIG. 25. This result indicates that chloride ions in the electrolyte solution (seawater) interact with single atom rhodium, enhancing an oxygen evolution activity of rhodium, and facilitating the progress of the reaction.

### Embodiment 5-Electrodeposition method

A preparation method of a nanomaterial with noble metal single atoms dispersed on a surface of a non-noble metal substrate adopts an electrodeposition method described in the third aspect of the present invention, which is specifically as follows:
step (1) a nickel iron hydroxide array was prepared:
   0.6 g of urea, 0.291 g of nickel nitrate, 0.133 g of ferric nitrate, 0.037 g of ammonium fluoride and deionized water were prepared into 36 mL of a solution, the solution was poured into 40 mL of a reactor, washed foam nickel iron with a size of 3*4 cm² was soaked into the solution, the solution was put into an oven, a reaction temperature was 100°C, the time was 12 hours, hydrothermal and crystallization were performed, and the obtained material was washed with water and ethyl alcohol for three times each, and dried in vacuum at 60°C for 10 hours to obtain foam nickel iron loaded with nickel iron hydroxide (the nickel iron hydroxide array).
Step (2): the obtained nickel iron hydroxide array was placed in a thiourea benzyl alcohol solution (13.7 mg of thiourea, 36 mL), hydrothermal was performed at 120°C for 5 hours, and sulfuration was performed. The obtained material was a nickel-iron sulfide material, which is used for electrodeposition of single atoms.
Step (3) 50 mL of an electrolyte solution was prepared: 50 mL of the electrolyte solution was prepared by mixing 2.0 g of sodium hydroxide and 1.8 mg of chloroauric acid with an appropriate amount of water.
Step (4) electrodeposition was performed: a three-electrode system was used in the electrolyte solution obtained in step (3), the nickel-iron sulfide material obtained in step (2) was a working electrode, a saturated calomel electrode was a reference electrode, a carbon rod was a counter electrode, a linear voltammetry was used, and parameters were: a voltage range was from 0 V to 1.2 V, a scanning direction was reverse, a scanning speed was 0.005 V/s, and the number of cycles was 10. The obtained material was washed with water and ethyl alcohol for three times each, and dried in vacuum at 60°C for 10 hours to obtain a gold/nickel-iron sulfide material.

### Application Example 5

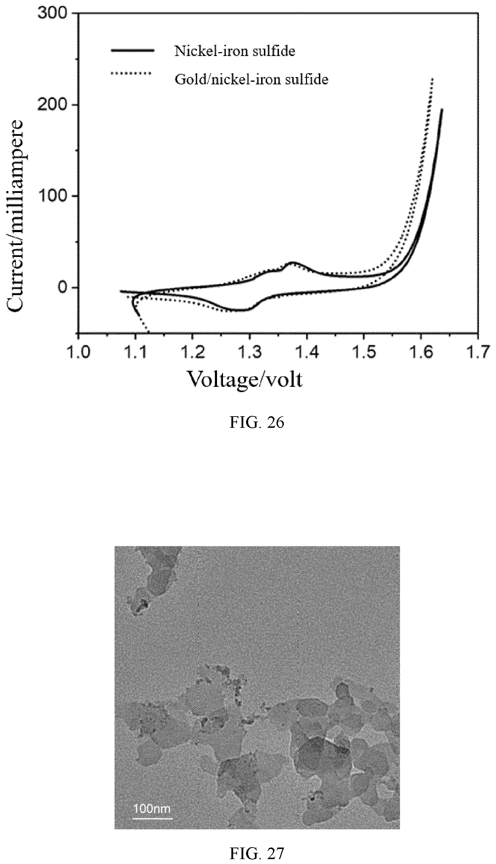

Electrolyzing seawater oxygen evolution performance of the material obtained in the present invention was also tested using a three-electrode system: a reference electrode was a saturated calomel electrode, a counter electrode was a platinum electrode, and a working electrode was the gold/nickel-iron sulfide material obtained in Embodiment 5, or the nickel-iron sulfide material obtained from step (2) in Embodiment 5. An electrolyte solution was a mixed solution of 6.0 M sodium hydroxide and 2.8 M sodium chloride, and the polarization curves obtained were as shown in FIG. 26.

It may be seen From FIG. 25 that the obtained gold/nickel-iron sulfide material has good electrolyzing seawater oxygen evolution performance (a dashed line curve in FIG. 26), its electrolyzing seawater oxygen evolution performance is better than that of a nickel-iron sulfide sheet material (a solid line curve in FIG. 26), and a potential at a current density of 200 mA/square centimeter is 1.47 V, which is 30 mV smaller than that of a nickel-cobalt-iron sulfide electrode.

### Comparative Example 3-Electrodeposition method

Referring to the method in Embodiment 5, the voltage range from 0 V to 1.2 V in step (4) was changed to be from -2.1 V to -0.2 V, and the obtained material is a gold particle/nickel-iron sulfide material. FIG. 27 is a transmission electron microscopy of the material, and it may be seen from the figure that due to the excessive large voltage range, gold forms particles on the surface of the substrate without forming single atom distribution.

### Comparative Application Example 3

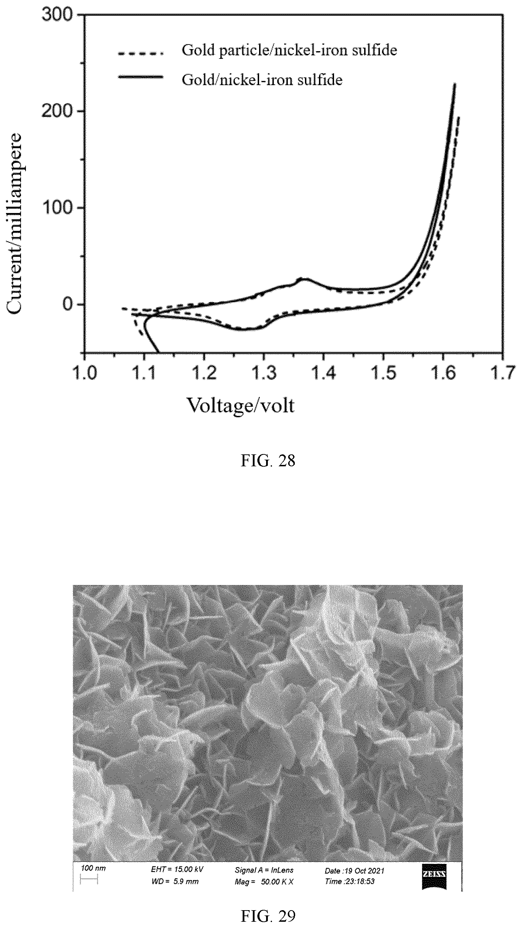

Electrolyzing seawater oxygen evolution performance of the material obtained in the present invention was also tested using a three-electrode system: a reference electrode was a saturated calomel electrode, a counter electrode was a platinum electrode, an electrolyte solution was a mixed solution of 6.0 M sodium hydroxide and 2.8 M sodium chloride, and a working electrode was the gold particle/nickel-iron sulfide material (dashed line) in Comparative Example 3, or the gold/nickel-iron sulfide material in Embodiment 5. Reference is made to FIG. 28 for obtained results, from which it may be concluded that when the current density reaches 10 mA/square centimeter, an overpotential of the gold particle/nickel-iron sulfide material is 1.441 V, which is about 15 mV higher than that of the gold/nickel-iron sulfide material (solid line) in Embodiment 5. Therefore, when the gold particle/nickel-iron sulfide material in Comparative Example 3 is used for seawater electrolysis, its activity is lower than that of the gold/nickel-iron sulfide material in Embodiment 5. The result shows that the performance of electrolyzing water/electrolyzing seawater is closely related to a catalyst structure, and a formed single atom catalyst has the best performance.

### Embodiment 6-Electrodeposition method

Referring to the method in Embodiment 5, 0.2 g of cobalt nitrate was added to a raw material in step (1), foam nickel was changed to carbon paper, and 1.8 mg of chloroauric acid in step (3) was changed to 1.3 mg of chloroplatinic acid to obtain a platinum/nickel-cobalt-iron sulfide material.

Reference is made to FIG. 29 for a scanning electron microscopy (SEM) of the obtained material, which has a morphology similar to that of the gold/nickel-iron sulfide material, with a smooth surface without obvious particles, preliminarily indicating a high dispersion of gold.

### Application Example 6

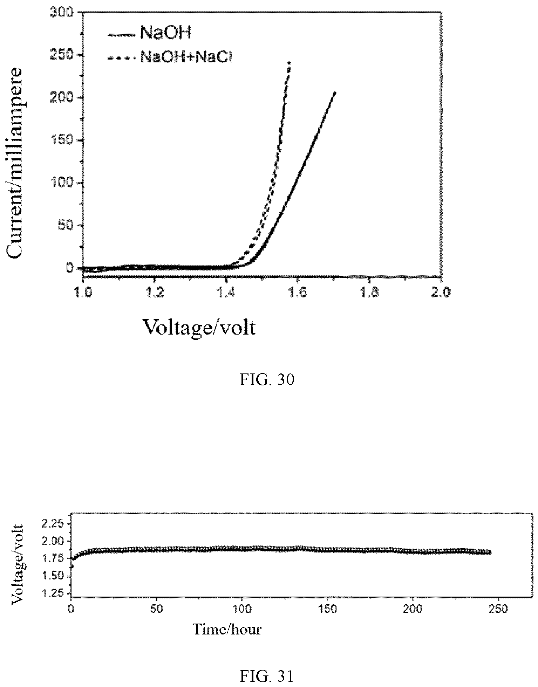

Electrolyzing seawater oxygen evolution performance of the material obtained in the present invention was also tested using a three-electrode system: a reference electrode was a saturated calomel electrode, a counter electrode was a platinum electrode, a working electrode was the platinum/nickel-cobalt-iron sulfide material obtained in Embodiment 6, and an electrolyte solution was respectively a 6.0 M sodium hydroxide solution and a mixed solution of 6.0 M sodium hydroxide and 2.8 M sodium chloride, so as to obtain polarization curves as shown in FIG. 30.

It may be concluded from the polarization curves that the platinum/nickel-cobalt-iron sulfide material has a potential of 1.444 V at a current density of 100 mA/square centimeter in simulated seawater (the mixed solution of 6.0 M sodium hydroxide and 2.8 M sodium chloride, a dashed-line curve in FIG. 30). Electrolysis was performed in alkaline deionized water (6.0 M sodium hydroxide, a solid-line curve in FIG. 30), and a potential at a current density of 100 mA/square centimeter was 1.446 V.

This indicates that the single atom loading of platinum effectively improves the performance of the electrolyzing seawater. Reference is made to FIG. 31 for a stability curve at a current density of 100 mA per square centimeter, a testing time was up to 250 hours, and voltage changes were essentially negligible.

### Embodiment 7-Electrodeposition method

Referring to the method in Embodiment 5, metal nitrate "0.291 g of nickel nitrate and 0.133 g of ferric nitrate" in step (1) was changed to 0.291 g of cobalt nitrate, 0.182 g of nickel nitrate, 0.202 g of ferric nitrate, 0.189 g of zinc nitrate and 0.115 g of aluminum nitrate, foam nickel was changed to a carbon cloth, and 1.8 mg of chloroauric acid in step (3) was changed to 1.7 mg of palladium chloride, so as to finally obtain a palladium/nickel-cobalt-zinc-iron-aluminum sulfide material.

### Application Example 7

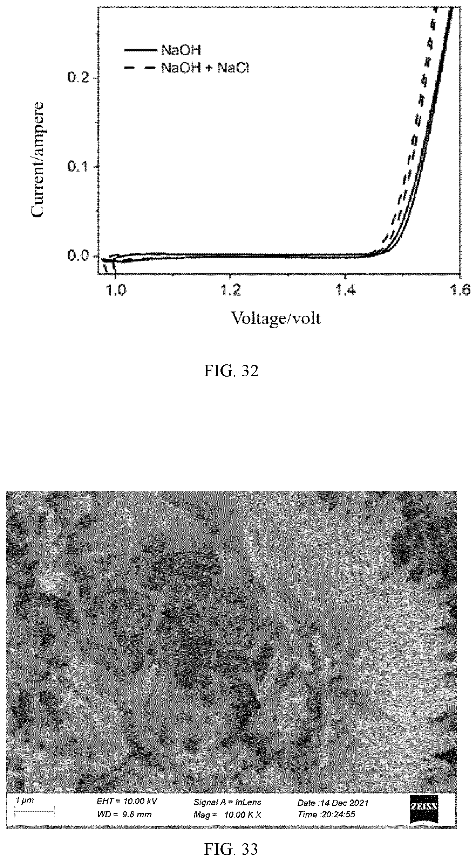

Electrolyzing seawater oxygen evolution performance of the material obtained in the present invention was also tested using a three-electrode system: a reference electrode was a saturated calomel electrode, a counter electrode was a platinum electrode, a working electrode was the palladium/nickel-cobalt-zinc-iron-aluminum sulfide material obtained in Embodiment 7, and an electrolyte solution was respectively a 6.0 M sodium hydroxide solution and a mixed solution of 6.0 M sodium hydroxide and 2.8 M sodium chloride, so as to obtain polarization curves as shown in FIG. 32. It may be concluded from the polarization curves that a peak potential of the palladium/nickel-cobalt-zinc-iron-aluminum sulfide material is 1.472 V in alkaline deionized water (6.0 M sodium hydroxide), and the peak potential of the palladium/nickel-cobalt-zinc-iron-aluminum sulfide material is 1.45 V in simulated seawater (the mixed solution of 6.0 M sodium hydroxide and 2.8 M sodium chloride, a dashed-line curve in FIG. 32). This indicates that in the simulated seawater, the peak potential of palladium/nickel-cobalt-zinc-iron-aluminum sulfide is earlier, and chlorine in the solution has a promoting effect on a catalytic activity of electrolyzing seawater oxygen evolution.

### Embodiment 8-Electrodeposition method

A preparation method of a nanomaterial with noble metal single atoms dispersed on a surface of a non-noble metal substrate adopts an electrodeposition method described in the third aspect of the present invention, which is specifically as follows:
step (1) a nickel iron vanadium hydroxide array was prepared:
   0.6 g of urea, 0.291 g of cobalt nitrate, 0.404 g of nickel nitrate, 0.015 g of vanadium chloride and water were prepared to obtain 30 mL of a solution, the solution was poured into 50 mL of a reactor, washed foam nickel cobalt with a size of 3*4 cm² was soaked into the solution, the solution was put into an oven, a reaction temperature was 120°C, and the time was 12 hours. The obtained material was washed with water and ethyl alcohol for three times each, and dried in vacuum at 60°C for 10 hours to obtain the nickel iron vanadium hydroxide array.
Step (2) the nickel iron vanadium hydroxide array obtained in step (1) and 500 mg of sodium hypophosphite were placed together in a tube furnace, heated up to 300°C, and subjected to heat preservation for 2 hours, and phosphating was performed to obtain a nickel-iron-vanadium phosphide material. The obtained material was used for electrodeposition of single atoms.
Step (3) 50 mL of an electrolyte solution was prepared: 50 mL of the electrolyte solution was prepared from 2.8 g of potassium hydroxide, 5.1 mg of ruthenium chloride, and water.
Step (4) electrodeposition was performed: a three-electrode system was used in the electrolyte solution obtained in (2): an array electrode obtained in step (2) was a working electrode, a saturated calomel electrode was a reference electrode, a carbon rod was a counter electrode, a linear voltammetry was used, and parameters were: a voltage range was from 0 V to 1 V, a scanning direction was forward, a scanning speed was 0.005 V/s, and the number of cycles was 20. The obtained material was washed with water and ethyl alcohol for three times each, and dried in vacuum at 60°C for 10 hours to obtain a ruthenium/nickel-iron-vanadium phosphide material.

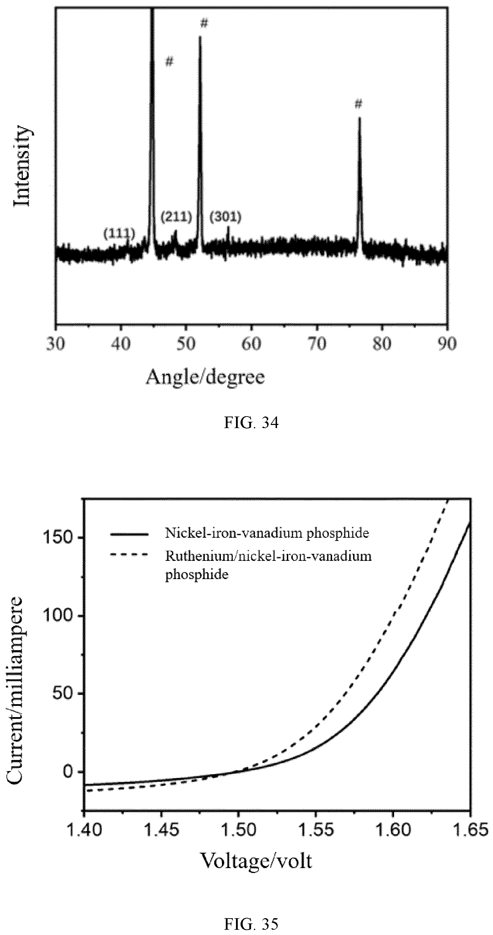

Reference is made to FIG. 33 for a scanning electron microscopy (SEM) of the obtained material. The ruthenium/nickel-iron-vanadium phosphide material was: a nano array with a smooth surface was grown on a foam nickel carrier, and the nano array was in a needle shape or in a flower shape composed of a plurality of nano needles; and a scale of the nano needles was: a width was in a range from 50 nanometers to 100 nanometers, and a length was in a range from 3 micrometers to 5 micrometers. Reference is made to FIG. 34 for an XRD of the obtained material, which is consistent with a diffraction peak of nickel-iron-vanadium phosphide, indicating that noble metal ruthenium was not crystallized separately into metal or metal oxide particles, and ruthenium was in a single atom dispersion state.

### Application Example 8

Electrolyzing seawater oxygen evolution performance of the material in Embodiment 8 was tested using a three-electrode system: a reference electrode was a saturated calomel electrode, a counter electrode was a platinum electrode, a working electrode was the ruthenium/nickel-iron-vanadium phosphide material obtained in Embodiment 8 or the nickel-iron-vanadium phosphide material obtained in step (2), and testing was performed in a mixed solution of 1.0 M sodium hydroxide and 0.5 M sodium chloride, so as to obtain polarization curves as shown in FIG. 35. It may be seen from FIG. 35 that a potential of the ruthenium/nickel-iron-vanadium phosphide material at a current of 10 mA was 1.473 V, and a potential of the nickel-iron-vanadium phosphide material at a current of 10 mA was 1.535 V. Therefore, the obtained ruthenium/nickel-iron-vanadium phosphide material has the good electrolyzing seawater oxygen evolution performance (a dashed line in FIG. 35), and its electrolyzing seawater oxygen evolution performance is better than that of the nickel-iron-vanadium phosphide material (a solid line in FIG. 35). This indicates that a ruthenium single atom effectively enhances the electrolyzing seawater oxygen evolution performance.

### Embodiment 9-Electrodeposition method

Referring to the method in Embodiment 5, "0.291 g of nickel nitrate, and 0.133 g of ferric nitrate" in step (1) were changed to "0.12 g of ferric nitrate, 0.108 g of nickel nitrate and 0.015 g of manganese sulfate", foam nickel iron was changed to foam nickel cobalt, and 1.8 mg of chloroauric acid in step (3) was changed to 3.4 mg of chloroauric acid, so as to obtain a gold/nickel-iron-manganese phosphide material.

### Application Example 9

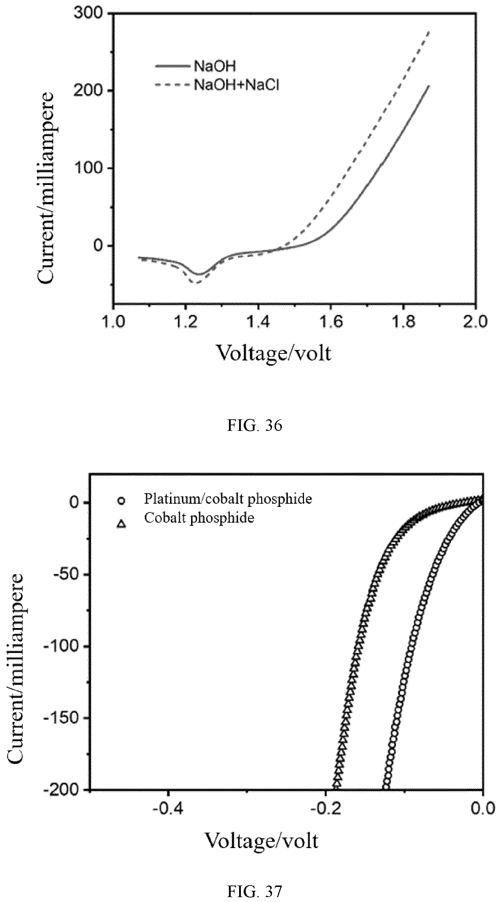

Electrolyzing seawater oxygen evolution performance of the material in Embodiment 9 was tested using a three-electrode system: a reference electrode was a saturated calomel electrode, a counter electrode was a platinum electrode, a working electrode was the gold/nickel-iron-manganese phosphide material prepared in Embodiment 9, and testing was respectively performed in a mixed solution of 1.0 M sodium hydroxide and 0.5 M sodium chloride and a 1.0 M sodium hydroxide solution, so as to obtain polarization curves as shown in FIG. 36.

It may be seen from FIG. 36 that the gold/nickel-iron-manganese phosphide material has a potential of 1.46 V at a current of 10 mA in the mixed solution of 1.0 M sodium hydroxide and 0.5 M sodium chloride, and has a potential of 1.51 V at a current of 10 mA in the 1.0 M sodium hydroxide solution. Therefore, the obtained gold/nickel-iron-manganese phosphide material has the good electrolyzing seawater oxygen evolution performance (a dashed line in FIG. 36), and its electrolyzing seawater oxygen evolution performance is better than the performance in alkaline electrolyzed pure water (a solid line in FIG. 36). This indicates that interaction between the noble metal and OH and Cl in the electrolyte solution significantly improves oxygen evolution performance of an electrode.

### Embodiment 10-Electrodeposition method

Referring to the method in Embodiment 5, the metal nitrate in step (1) was changed to 0.291 g of cobalt nitrate, and the chloroauric acid in step (3) was changed to 3.3 mg of platinum chloride so as to obtain a platinum/cobalt phosphide material.

Wherein a cobalt phosphide material obtained in step (2) was used for comparative experiments in Application Example 10.

### Application Example 10

Electrolyzing seawater hydrogen evolution performance of the material obtained in Embodiment 10 was tested using a three-electrode system: a reference electrode was a saturated calomel electrode, a counter electrode was a platinum electrode, a working electrode was the platinum/cobalt phosphide material or the cobalt phosphide material obtained in Embodiment 10, and testing was performed in a mixed solution of 1.0 M sodium hydroxide and 0.5 M sodium chloride, so as to obtain polarization curves as shown in FIG. 37. It may be seen from FIG. 37 that a potential of the platinum/cobalt phosphide material is -0.025 V at a current density of -10 mA/square centimeter, and a potential of the cobalt phosphide material is -0.081 V at a current density of -10 mA/square centimeter. Therefore, the platinum/cobalt phosphide material has the good electrolyzing seawater hydrogen evolution performance, and its electrolyzing seawater hydrogen evolution performance is better than that of the cobalt phosphide material.

### Embodiment 11-Electrodeposition method

Referring to the method in Embodiment 5, the metal nitrate in step (1) was changed to 0.291 g of cobalt nitrate, 0.03 g of indium nitrate and 0.404 g of iron nitrate, and the chloroauric acid in step (3) was changed to 8.49 g of silver nitrate (1000 mmol/L) so as to obtain a silver/nickel-cobalt-indium phosphide material.

Wherein a nickel-cobalt-indium phosphide material obtained in step (2) was used for comparative experiments in Application Example 11.

### Application Example 11

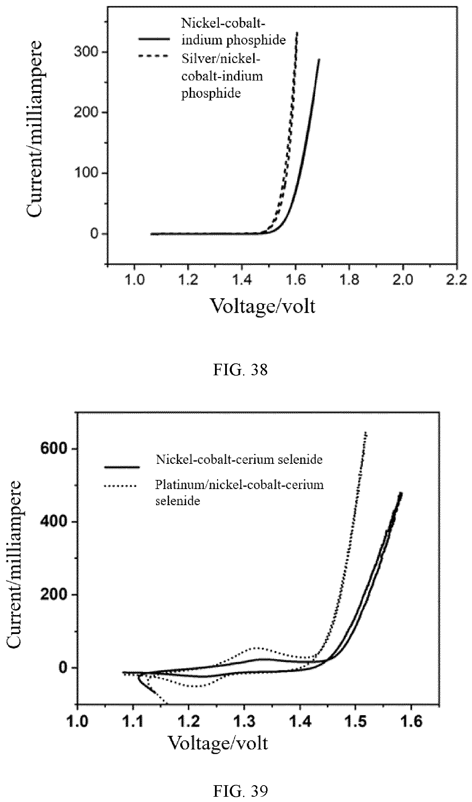

Electrolyzing seawater hydrogen evolution performance of the material obtained in Embodiment 11 was tested using a three-electrode system: a reference electrode was a saturated calomel electrode, a counter electrode was a platinum electrode, a working electrode was the silver/nickel-cobalt-indium phosphide material or the nickel-cobalt-indium phosphide material obtained in Embodiment 11, and testing was performed in a mixed solution of 1.0 M sodium hydroxide and 0.5 M sodium chloride, so as to obtain polarization curves as shown in FIG. 38. It may be seen from FIG. 38 that a potential of the silver/nickel-cobalt-indium phosphide material is 1.45 V at a current density of 10 mA/square centimeter, and a potential of the nickel-cobalt-indium phosphide material is 1.55 V at a current density of 10 mA/square centimeter. Therefore, the silver/nickel-cobalt-indium phosphide material has the good electrolyzing seawater hydrogen evolution performance, and its electrolyzing seawater hydrogen evolution performance is better than that of the nickel-cobalt-indium phosphide material.

### Embodiment 12-Electrodeposition method

Step (1) 0.366 g of cobalt nitrate, 0.182 g of nickel nitrate and 0.033 g of cerium nitrate, as well as 90 mL of water were added into an electrolytic cell, a three-electrode system was applied, and electrochemical deposition preparation was performed in an electrochemical workstation by taking 3cm*3cm foam nickel as a working electrode, a carbon rod as a counter electrode, and a saturated calomel electrode as a reference electrode. A deposition potential was -1.2 V, and a deposition time was 3600 seconds. The obtained material was washed with water and ethyl alcohol for three times each and dried in vacuum to obtain a nickel cobalt cerium hydroxide array material (nickel cobalt cerium metal hydroxide loaded on the foam nickel).

Step (2) the 3*3cm² array nickel cobalt cerium array material prepared in step (1) was transferred to a magnetic boat, and the magnetic boat was placed downstream of a tube furnace. 0.3 g of selenium powder was placed on the other magnetic boat, and the magnetic boat was placed upstream of the tube furnace. Under N₂ atmosphere, calcination was performed at 400°C for 2 hours at a heating rate of 5°C/min, and then cooling was performed until a room temperature was reached. A final product was washed three times with ethyl alcohol to obtain a nickel-cobalt-cerium selenide material.

Step (3) 100 mL of an electrolyte solution was prepared: 100 mL of the electrolyte solution was obtained by mixing chloroplatinic acid with NaOH, NaCl and water. In the electrolyte solution, a concentration of the chloroplatinic acid is 100 mM, a concentration of the NaOH is 6 mol/L, and a concentration of the NaCl is 2.8 mol/L.

Step (4) electrodeposition was performed: a three-electrode system was used, the nickel-cobalt-cerium selenide material prepared in step (2) was directly used as a working electrode, electrodeposition was performed in the electrolyte solution in step (3), and noble metal single atoms were deposited on the working electrode. A deposition potential was in a range from 0.03 V to 0.73 V (VS SCE), the number of cycles was 3, and a scanning speed was 5 mv/s. The obtained material was washed with water and ethyl alcohol for three times each, and dried in vacuum to obtain a platinum/nickel-cobalt-cerium selenide material.

The nickel-cobalt-cerium selenide material obtained in step (2) was used for comparative experiments in Application Example 12.

### Application Example 12

Electrolyzing seawater hydrogen evolution performance of the material obtained in Embodiment 12 was tested by using a three-electrode system:
a working electrode was the platinum/nickel-cobalt-cerium selenide material or the nickel-cobalt-cerium selenide material, a reference electrode was a saturated calomel electrode, a counter electrode was a platinum electrode, and testing was performed in a mixed solution of 1.0 M sodium hydroxide and 0.5 M sodium chloride, so as to obtain polarization curves as shown in FIG. 39. It may be concluded from the polarization curves that as an anode of electrolyzing seawater, the platinum/nickel-cobalt-cerium selenide material has better performance than the nickel-cobalt-cerium selenide material. A peak potential of the platinum/nickel-cobalt-cerium selenide material is only 1.44 V, which is about 50 mV smaller than that of the nickel-cobalt-cerium selenide material. This indicates that the dispersion of platinum single atoms on the surface of nickel-cobalt-cerium selenide has an excellent effect on improving the intrinsic activity of electrolyzing seawater oxygen evolution of the material.

### Comparative Example 4-Electrodeposition method

Referring to the method in Embodiment 12, a concentration of chloroplatinic acid being 100 mM, a concentration of NaOH being 6 mol/L, and a concentration of NaCl being 2.8 mol/L in step (3) were changed to the concentration of chloroplatinic acid being 100 mM, the concentration of NaOH being 6 mol/L, and the concentration of NaCl being 0.1 mol/L. The obtained material is platinum oxygen/nickel-cobalt-cerium selenide. At this time, platinum is only coordinated with oxygen, and is not coordinated with halogen.

### Comparative Application Example 4

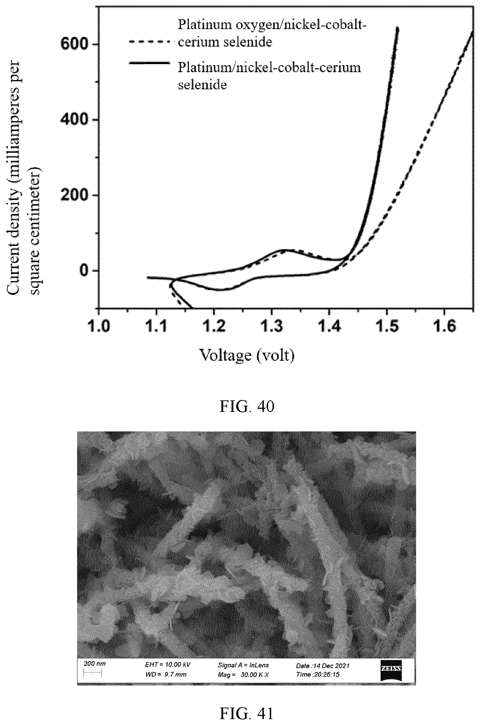

Electrolyzing seawater hydrogen evolution performance of the material obtained in Comparative Example 4 was tested by using a three-electrode system:
a working electrode was changed to the platinum oxygen/nickel-cobalt-cerium selenide in Comparative Example 4, a reference electrode was a saturated calomel electrode, a counter electrode was a platinum electrode, and testing was performed in a mixed solution of 1.0 M sodium hydroxide and 0.5 M sodium chloride, so as to obtain a result as shown in FIG. 40. It may be concluded from the figure that when the current density reaches 10 mA/square centimeter, a peak potential of the platinum oxygen/nickel-cobalt-cerium selenide is 1.45 V (dashed line), which is about 10 mV higher than that of the platinum/nickel-cobalt-cerium selenide (solid line) in Embodiment 12. Therefore, when the platinum oxygen/nickel-cobalt-cerium selenide in Comparative Example 4 is used for seawater electrolysis, its activity is lower than that of the platinum/nickel-cobalt-cerium selenide in Embodiment 12. The results show that the electrolyzing water/electrolyzing seawater hydrogen evolution performance of the material is closely related to a local coordination structure of the single atoms of the noble metal, and the noble metal has the best performance when being coordinated with both the halogen and the oxygen-containing functional groups. Moreover, it has been proven that a coordination structure during the preparation of the platinum/nickel-cobalt-cerium selenide material is related to the concentration of sodium chloride.

### Embodiment 13-Electrodeposition method

Referring to the method in Embodiment 12, the metal nitrate in step (1) was changed to 0.732 g of cobalt nitrate, and the soluble noble metal salt in step (3) was changed to potassium chlororuthenate, so as to obtain a nano array with ruthenium dispersed on a surface of cobalt selenide, namely, a ruthenium/cobalt selenide material. Compared to Embodiment 12, both were used to prepare selenide, and sodium chloride was not added in a preparation process of this material.

Reference is made to FIG. 41 for a scanning electron microscopy (SEM) of the obtained material, which is a "dandelion"-shaped array composed of nanowires grown on a foam nickel carrier. The nanowires have a diameter of about 10-50 nanometers, a length of about 1-2 microns, and a smooth surface without particles.

### Application Example 13

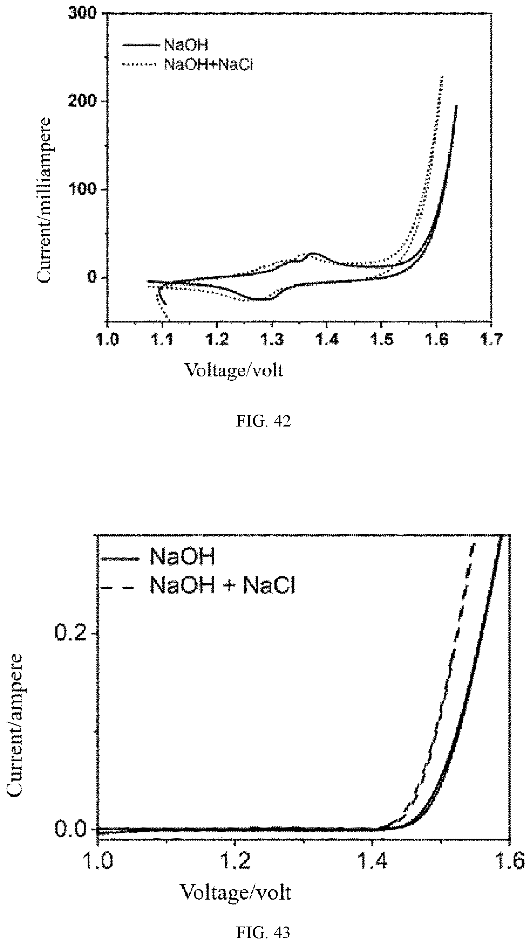

Electrolyzing seawater hydrogen evolution performance of the material obtained in Embodiment 13 was tested by using a three-electrode system:
a working electrode was changed to the ruthenium/cobalt selenide material or a cobalt selenide material in Embodiment 13, a reference electrode was a saturated calomel electrode, a counter electrode was a platinum electrode, and testing was performed in seawater (a mixed solution of 6 M sodium hydroxide and 2.8 M sodium chloride) or alkaline deionized water (a 6 M sodium hydroxide solution), so as to obtain polarization curves as shown in FIG. 42. It may be seen from the polarization curves that a ruthenium/cobalt selenide electrode serves as an anode for electrolyzing seawater, and in the seawater (the solution of 6 M sodium hydroxide+2.8 M sodium chloride, a dashed line in FIG. 42) and the alkaline deionized water (the 6 M sodium hydroxide solution, a solid line in FIG. 42), potentials at the current density of 200 mA/square centimeter were 1.51 V and 1.56 V respectively, which indicates that the single atom loading of ruthenium is used for the electrolyzing seawater, and chloride ions in the seawater interact with the ruthenium single atoms to regulate and control an active site structure, thereby effectively improving the performance of the electrolyzing seawater.

### Embodiment 14-Electrodeposition method

Referring to the method in Embodiment 12, the metal nitrate in step (1) was changed to 0.291 g of nickel nitrate and 0.404 g of ferric nitrate, and the soluble noble metal salt in step (3) was changed to iridium chloride, so as to obtain a nano array with iridium dispersed on a surface of nickel selenide, namely, an iridium/nickel-iron selenide material.

The nickel-iron selenide material obtained in step (2) was used for comparative experiments in Application Example 14.

### Application Example 14

Electrolyzing seawater hydrogen evolution performance of the material obtained in Embodiment 14 was tested by using a three-electrode system:
a working electrode was changed to the iridium/nickel-iron selenide material or the nickel-iron selenide material in Embodiment 14, a reference electrode was a saturated calomel electrode, a counter electrode was a platinum electrode, and testing was performed in seawater (a mixed solution of 6 M sodium hydroxide and 2.8 M sodium chloride) or alkaline deionized water (a 6 M sodium hydroxide solution), so as to obtain polarization curves as shown in FIG. 43. It may be seen from the polarization curves that the iridium/nickel-iron selenide material serves as an anode for electrolyzing seawater, and in the seawater (a dashed line in FIG. 43) and the alkaline deionized water (a solid line in FIG. 43), potentials at the current density of 200 mA/square centimeter were 1.51 V and 1.56 V respectively, which indicates that the single atom loading material of iridium is used for the electrolyzing seawater, and chloride ions in the seawater interact with the iridium single atoms to regulate and control an active site structure, thereby effectively improving the performance of the electrolyzing seawater.

### Embodiment 15-Double noble metal loading-Electrodeposition method

Referring to the method in Embodiment 12, the metal nitrate in step (1) was changed to 0.174 g of nickel nitrate, 0.121 g of ferric nitrate and 0.037 g of vanadium nitrate, and the soluble noble metal salt in step (3) was changed to 2 mg of iridium chloride and 1 mg of platinum chloride, so as to obtain a nano array with iridium platinum dispersed on a surface of nickel-iron-vanadium selenide, namely, an iridium platinum/nickel-iron-vanadium selenide material.

The nickel-iron-vanadium selenide material in step (2) was used for comparative experiments in Application Example 15.

### Application Example 15

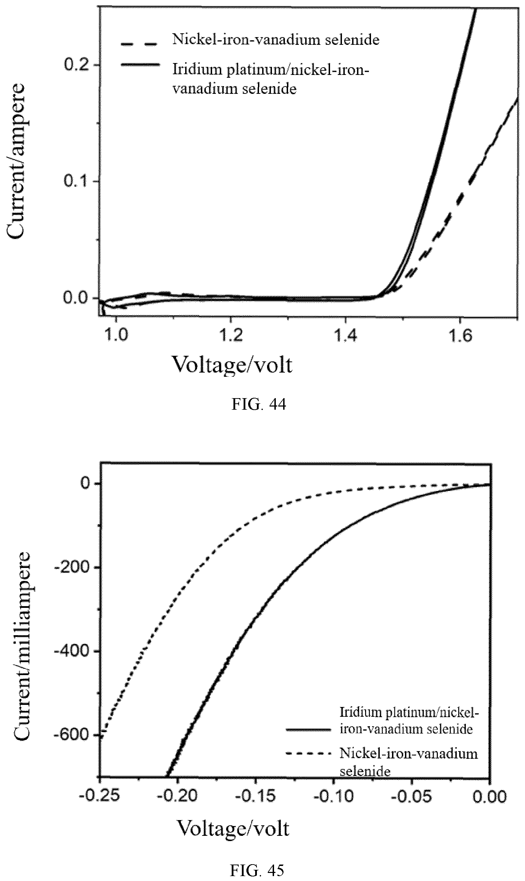

Electrolyzing seawater oxygen evolution performance of the material obtained in Embodiment 15 was tested under a three-electrode testing system:
a reference electrode was a saturated calomel electrode, a counter electrode was a platinum electrode, a working electrode was changed to the iridium platinum/nickel-iron-vanadium selenide material or the nickel-iron-vanadium selenide material in Embodiment 15, a voltage range was from 0 V to 1 V (relative to saturated calomel), and an electrolyte solution was changed to 6.0 M sodium hydroxide and 2.8 M saturated sodium chloride to characterize the electrolyzing seawater oxygen evolution performance of the material. It may be seen from FIG. 44 that the obtained iridium platinum/nickel-iron-vanadium selenide material has the good electrolyzing seawater oxygen evolution performance, and its electrolyzing seawater oxygen evolution performance is better than that of the nickel-iron-vanadium selenide material.

Electrolyzing seawater hydrogen evolution performance of the material obtained in Embodiment 15 was tested by using a three-electrode system:
a reference electrode was a saturated calomel electrode, a counter electrode was a platinum electrode, the voltage range was from -1 V to -2V (relative to saturated calomel), an electrolyte solution was 6.0 M sodium hydroxide and 2.8 M saturated sodium chloride to characterize cathodic hydrogen evolution performance of the electrolyzing seawater of the material, and the obtained testing results were as shown in FIG. 45. It may be concluded from the figure that the iridium platinum/nickel-iron-vanadium selenide material simultaneously has the good cathodic hydrogen evolution performance, specifically manifested as a hydrogen evolution peak overpotential of about 20 mV of the iridium platinum/nickel-iron-vanadium selenide material and a peak overpotential of about 80 mV of the nickel-iron-vanadium selenide material. Therefore, the single atom distribution of iridium-platinum double noble metals advances the peak potential for hydrogen evolution by about 60 mV, which proves to be beneficial for improving the catalytic activity of a hydrogen evolution reaction.

### Embodiment 16-Electrodeposition method

Referring to the method in Embodiment 8, the metal nitrate in step (1) was changed to 0.174 g of nickel nitrate, 0.191 g of cobalt nitrate and 0.023 g of cadmium nitrate, and the soluble noble metal salt in step (3) was changed to 0.148 mg (0.001 mmol/L) of osmium chloride and 0.2 mg (0.1 mmol/L) of sodium hydroxide, so as to obtain a nano array with osmium dispersed on a surface of nickel-cobalt-cadmium selenide, namely, an osmium/nickel-cobalt-cadmium selenide material.

The nickel-cobalt-cadmium selenide material in step (2) was used for comparative experiments in Application Example 16.

### Application Example 16

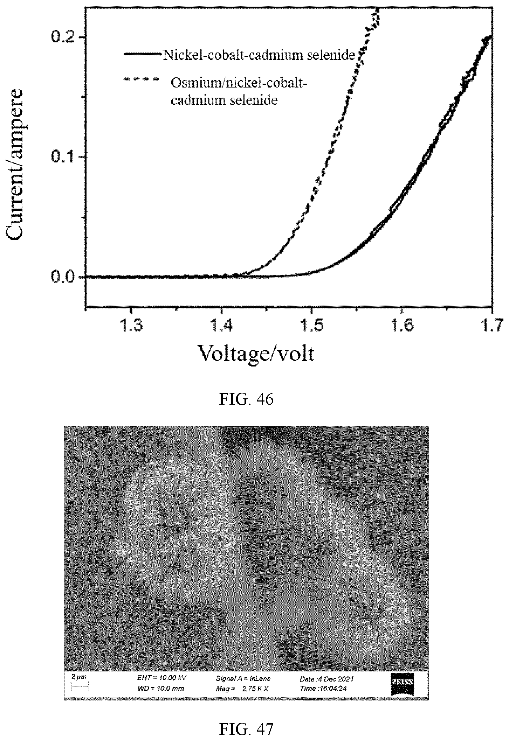

Testing was performed under a three-electrode testing system: a reference electrode was a saturated calomel electrode, a counter electrode was a platinum electrode, a working electrode was the osmium/nickel-cobalt-cadmium selenide material or the nickel-cobalt-cadmium selenide material in Embodiment 16, and an electrolyte solution was changed to 6.0 M sodium hydroxide and 2.8 M saturated sodium chloride to characterize the electrolyzing seawater oxygen evolution performance of the material. It may be seen from FIG. 46 that the obtained osmium/nickel-cobalt-cadmium selenide material has the good electrolyzed water oxygen evolution performance, and its electrolyzed water oxygen evolution performance is better than that of the nickel-cobalt-cadmium selenide material. An overpotential of the osmium/nickel-cobalt-cadmium selenide material at a current of 10 mA was only about 218 mV, which was about 86 mV smaller than that of the nickel-cobalt-cadmium selenide material.

### Embodiment 17-Electrodeposition method

Step (1) a cobalt hydroxide material was prepared:
0.6 g of urea, 0.291 g of cobalt nitrate, 0.037 g of ammonium fluoride, and water were prepared to obtain 36 mL of a solution, the solution was poured into 40 mL of a reactor, washed foam nickel was soaked into the solution, the solution was put into an oven, a reaction temperature was 100°C, and the time was 12 hours. The obtained material was washed with water and ethyl alcohol for three times each, and dried in vacuum at 60°C for 10 hours.

Step (2) the cobalt hydroxide material obtained in step (1) was placed in a center of a tube furnace and calcined at 200°C for 4 hours to obtain a cobaltosic oxide material.

Step (3) 50 mL of an electrolyte solution was prepared: 50 mL of the electrolyte solution was prepared from 2.0 g of sodium hydroxide, 1.8 mg of iridium chloride, and water.

Step (4) electrodeposition was performed: a three-electrode system was used in the electrolyte solution obtained in (3): an array electrode obtained in step (2) was a working electrode, a saturated calomel electrode was a reference electrode, a carbon rod was a counter electrode, a linear voltammetry was used, and parameters were: a voltage range was from -0.7 V to -0.5 V, a scanning direction was reverse, a scanning speed was 0.005 V/s, and the number of cycles was 10. The obtained material was washed with water and ethyl alcohol for three times each, and dried in vacuum at 60°C for 10 hours to obtain an iridium/cobaltosic oxide material.

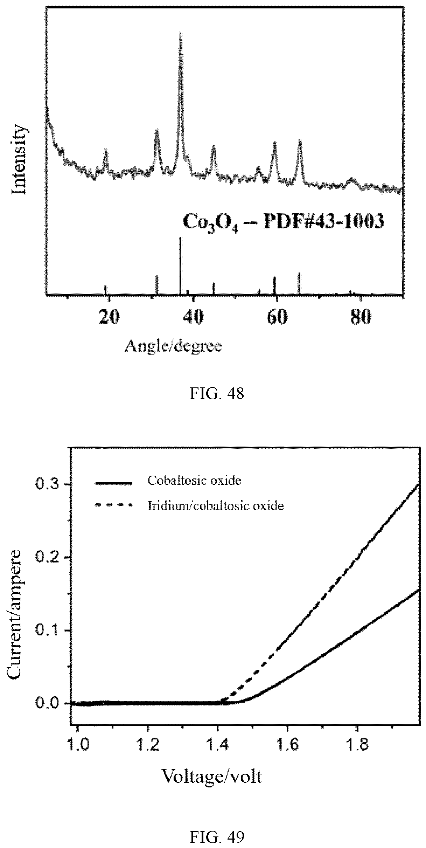

Reference is made to FIG. 47 for a scanning electron microscopy of the obtained material, and it may be concluded from the figure that a surface of the material is smooth and free of particles formed by noble metal. Reference is made to FIG. 48 for an XRD of the obtained material, which is consistent with a diffraction peak of cobaltosic oxide, indicating that iridium was not crystallized separately into metal or a metal oxide.

The cobaltosic oxide material in step (2) was used for comparative experiments in Application Example 17.

### Application Example 17

Electrolyzing seawater oxygen evolution performance of the iridium/cobaltosic oxide material and the cobaltosic oxide material in Embodiment 17 was tested by using a three-electrode system: testing was performed in a mixed solution of 6.0 M sodium hydroxide and 2.8 M sodium chloride, so as to obtain polarization curves as shown in FIG. 49. It may be seen from FIG. 49 that the obtained iridium/cobaltosic oxide material has the good electrolyzing seawater oxygen evolution performance (a dashed line in FIG. 49), and its electrolyzing seawater oxygen evolution performance is better than that of the cobaltosic oxide material (a solid line in FIG. 49). A potential of the iridium/cobaltosic oxide material at a current density of 200 mA/square centimeter was 1.49 V, which was 90 mV smaller than that of a cobaltosic oxide electrode.

### Embodiment 18-Double noble metal loading-Electrodeposition method

Referring to the method in Embodiment 17, the metal nitrate in step (1) was changed to: 271 g of nickel nitrate, 0.404 g of ferric nitrate, 0.050 g of copper nitrate, and 0.050 g of strontium nitrate; and the iridium chloride in step (3) was changed to 3 mg of ruthenium chloride and 2 mg of palladium chloride, so as to obtain a ruthenium palladium/nickel-iron-copper-strontium oxide material.

The nickel-iron-copper-strontium oxide material in step (2) was used for comparative experiments in Application Example 18.

### Application Example 18

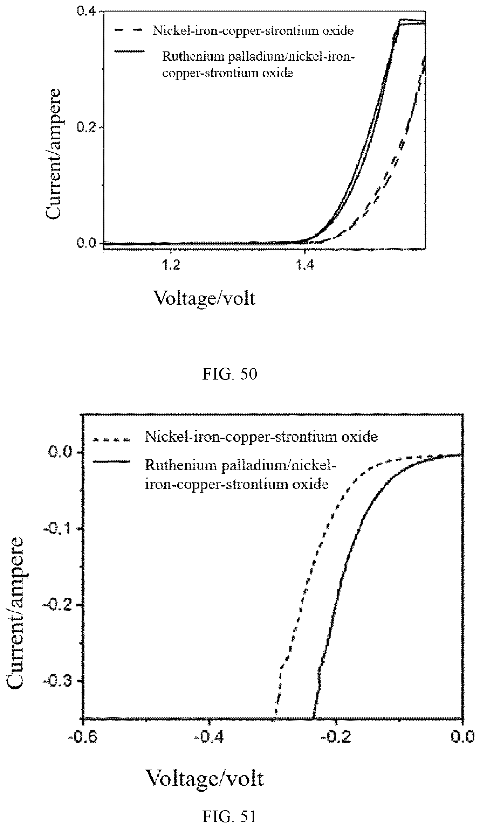

Electrolyzing seawater oxygen evolution performance of the material obtained in Embodiment 18 was tested under a three-electrode testing system:
a reference electrode was a saturated calomel electrode, a counter electrode was a platinum electrode, a working electrode was the ruthenium palladium/nickel-iron-copper-strontium oxide material or the nickel-iron-copper-strontium oxide material prepared in Embodiment 18, a voltage range was from 0 V to 1 V, and an electrolyte solution was 6.0 M sodium hydroxide and 2.8 M sodium chloride to characterize the electrolyzing seawater oxygen evolution performance of the material. It may be seen from FIG. 50 that the obtained ruthenium palladium/nickel-iron-copper-strontium oxide material has the good electrolyzed water oxygen evolution performance (with a peak potential of 1.393 V), and its electrolyzed water oxygen evolution performance is better than that of the nickel-iron-copper-strontium oxide material (with a peak potential of 1.425 V).

Electrolyzing seawater hydrogen evolution performance of the material obtained in Embodiment 18 was tested under a three-electrode testing system:
a reference electrode was a saturated calomel electrode, a counter electrode was a platinum electrode, a working electrode was the ruthenium palladium/nickel-iron-copper-strontium oxide or the nickel-iron-copper-strontium oxide material prepared in Embodiment 18, the voltage range was from -1 V to -2V, an electrolyte solution was 6.0 M sodium hydroxide and 2.8 M sodium chloride to characterize cathodic hydrogen evolution performance of the electrolyzing seawater of the material, and the obtained testing results were as shown in FIG. 51. It may be concluded from the figure that the ruthenium palladium/nickel-iron-copper-strontium oxide material simultaneously has the good cathodic hydrogen evolution performance, specifically manifested as a hydrogen evolution peak potential of about 17 mV of the ruthenium palladium/nickel-iron-copper-strontium oxide material and a peak potential of about 88 mV of the nickel-iron-copper-strontium oxide material. The single atom distribution of ruthenium-palladium double noble metals advances the peak potential for hydrogen evolution by about 60 mV, and thus is proven to be beneficial for improving the catalytic activity of a hydrogen evolution reaction.

### Embodiment 19-Electrodeposition method

A preparation method of a nanomaterial with noble metal single atoms dispersed on a surface of a non-noble metal substrate adopts an electrodeposition method described in the third aspect of the present invention, which is specifically as follows:
step (1) a nickel cobalt iron hydroxide array was prepared:
   0.6 g of urea, 0.291 g of nickel nitrate, 0.291 g of cobalt nitrate, 0.266 g of ferric nitrate, 0.037 g of ammonium fluoride and deionized water were prepared into 36 mL of a solution, the solution was poured into 40 mL of a reactor, washed foam nickel iron with a size of 3*4 cm² was soaked into the solution, the solution was put into an oven, a reaction temperature was 100°C, the time was 12 hours, hydrothermal and crystallization were performed, and the obtained material was washed with water and ethyl alcohol for three times each, and dried in vacuum at 60°C for 10 hours to obtain foam nickel iron loaded with nickel cobalt iron hydroxide (the nickel cobalt iron hydroxide array).
Step (2): the obtained nickel cobalt iron hydroxide array was placed in a thiourea benzyl alcohol solution (13.7 mg of thiourea, 36 mL), hydrothermal was performed at 120°C for 5 hours, and sulfuration was performed. The obtained material was a nickel-cobalt-iron sulfide material, which is used for electrodeposition of single atoms.
Step (3) 50 mL of an electrolyte solution was prepared: 50 mL of the electrolyte solution was prepared by mixing 2.0 g of sodium hydroxide and 1.8 mg of chloroauric acid with an appropriate amount of water.
Step (4) electrodeposition was performed: a three-electrode system was used in the electrolyte solution obtained in step (3), the nickel-cobalt-iron sulfide material obtained in step (2) was a working electrode, a saturated calomel electrode was a reference electrode, a carbon rod was a counter electrode, a linear voltammetry was used, and parameters were: a voltage range was from 0 V to 1.2 V, a scanning direction was reverse, a scanning speed was 0.005 V/s, and the number of cycles was 10. The obtained material was washed with water and ethyl alcohol for three times each, and dried in vacuum at 60°C for 10 hours to obtain a gold/nickel-cobalt-iron sulfide material.

### Application Example 19

### 1. Electrolyzing seawater performance

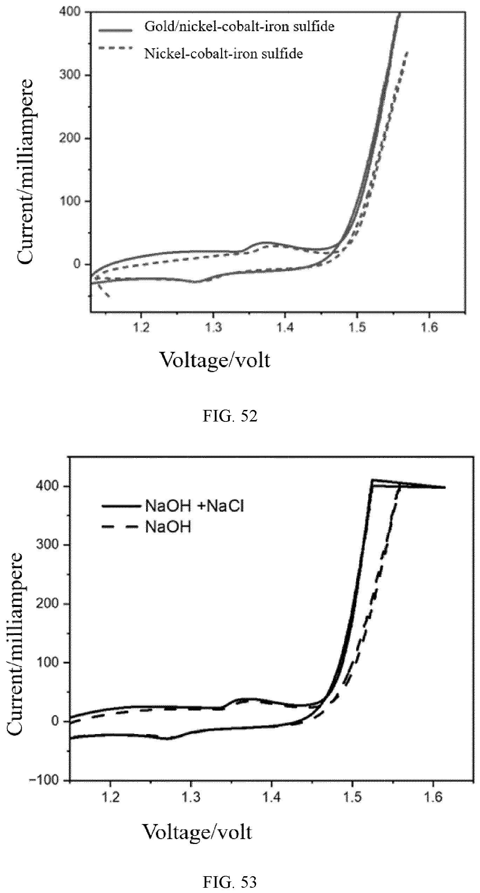

Electrolyzing seawater oxygen evolution performance of the material obtained in the present invention was also tested by using a three-electrode system:
a reference electrode was a saturated calomel electrode, a counter electrode was a platinum electrode, and a working electrode was the gold/nickel-cobalt-iron sulfide material obtained in Embodiment 19, or the nickel-cobalt-iron sulfide material obtained from step (2) in Embodiment 19. An electrolyte solution was a 6.0 M sodium hydroxide solution, and polarization curves obtained were as shown in FIG. 52.

A reference electrode was a saturated calomel electrode, a counter electrode was a platinum electrode, a working electrode was the gold/nickel-cobalt-iron sulfide material obtained in Embodiment 19, and an electrolyte solution was a mixed solution of 6.0 M sodium hydroxide and 2.8 M sodium chloride, so as to obtain polarization curves as shown in FIG. 53.

It may be seen From FIG. 52 that the obtained gold/nickel-cobalt-iron sulfide material has good alkaline electrolyzed water oxygen evolution performance, its alkaline electrolyzed water oxygen evolution performance is better than that of the nickel-cobalt-iron sulfide material, and a potential at a current density of 100 mA/square centimeter was 1.50 V, which is 19 mV smaller than that of a nickel-cobalt-iron sulfide electrode.

It may be seen from FIG. 53 that the obtained gold/nickel-cobalt-iron sulfide material has good electrolyzing seawater oxygen evolution performance. In seawater, the required overpotential to reach 100 mA/square centimeter was 1.485 V, which is 15 mV smaller than that in alkaline pure water, and thus the gold/nickel-cobalt-iron sulfide material has the better catalytic activity.

### 2. Influence of bromide ions on electrolyzing seawater performance

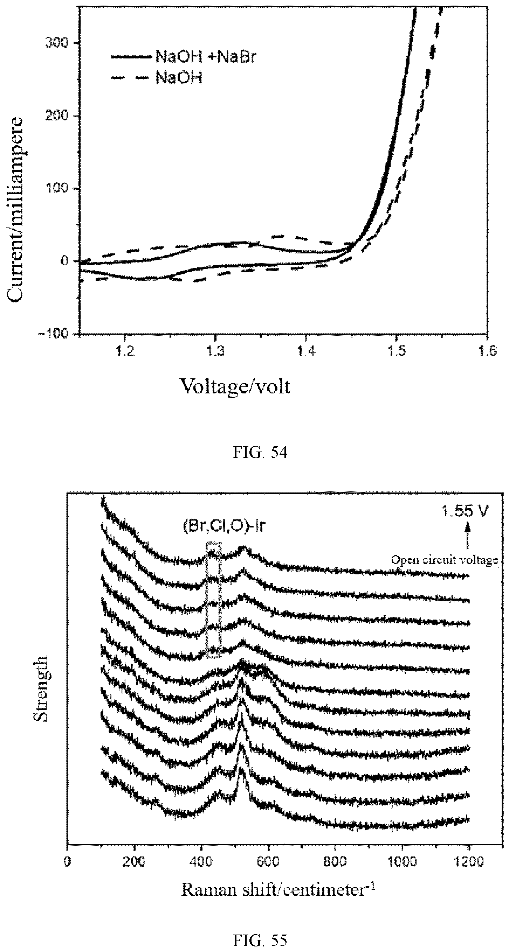

Referring to the first aspect of Application Example 19, under the same three-electrode testing system, sodium bromide was added to an electrolyte solution, that is, the electrolyte solution was changed to a 6.0 M sodium hydroxide solution, or a mixed solution of 6.0 M sodium hydroxide and 2.0 M sodium bromide, a working electrode was the gold/nickel-cobalt-iron sulfide material obtained in Embodiment 19, and the polarization curves obtained were as shown in FIG. 54.

It may be concluded from FIG. 54 that adding bromide ions to a testing solution may advance the peak potential (1.50 V) of gold/nickel-cobalt-iron sulfide to 1.482 V, which is beneficial for the material to catalyze hydrolysis and oxygen evolution.

During electrolysis, real-time characterization was performed using in situ Raman (FIG. 55), and bromine elements in the electrolyte solution can perform coordination with noble metal single atoms. In the material in the electrolysis process, gold atoms are simultaneously coordinated with oxygen, chlorine and bromine.

### 3. Influence of fluoride ions on electrolyzing seawater performance

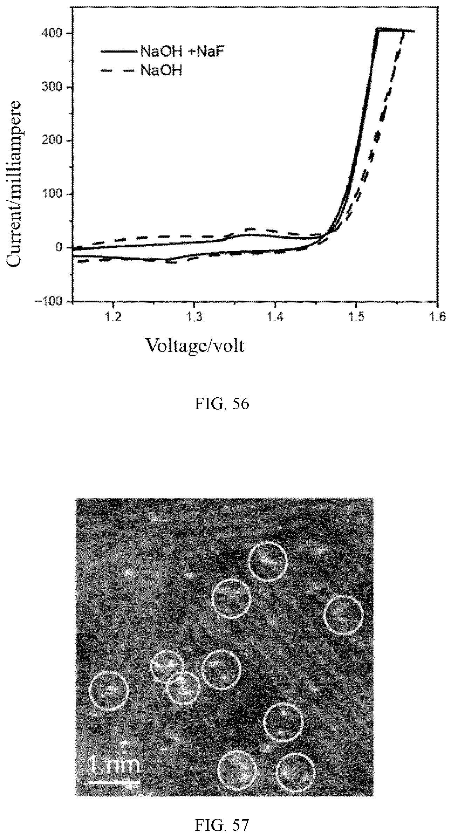

Referring to the first aspect of Application Example 19, under the same three-electrode testing system, sodium fluoride was added to an electrolyte solution, that is, the electrolyte solution was changed to 6.0 M sodium hydroxide, or 6.0 M sodium hydroxide and 2.0 M sodium fluoride, a working electrode was the gold/nickel-cobalt-iron sulfide material obtained in Embodiment 19, and the polarization curves obtained were as shown in FIG. 56.

It may be concluded from FIG. 56 that adding fluoride ions to a testing solution may advance the peak potential (1.50 V) of gold/nickel-cobalt-iron sulfide to 1.475 V, which is beneficial for the material to catalyze hydrolysis and oxygen evolution. In the electrolysis process, gold atoms are simultaneously coordinated with oxygen, chlorine and fluorine.

### Embodiment 20-Double noble metal loading-Electrodeposition method

Referring to the method in Embodiment 19, the metal nitrate in step (1) was changed to: 0.810 g of nickel nitrate, and 0.404 g of ferric nitrate; and the iridium chloride in step (3) was changed to 3 mg of iridium chloride and 2 mg of ruthenium chloride, so as to finally obtain an iridium ruthenium/nickel-iron sulfide material.

Wherein, referring to the method in Embodiment 19, a nickel-iron sulfide material was obtained in step (2) of Embodiment 20.

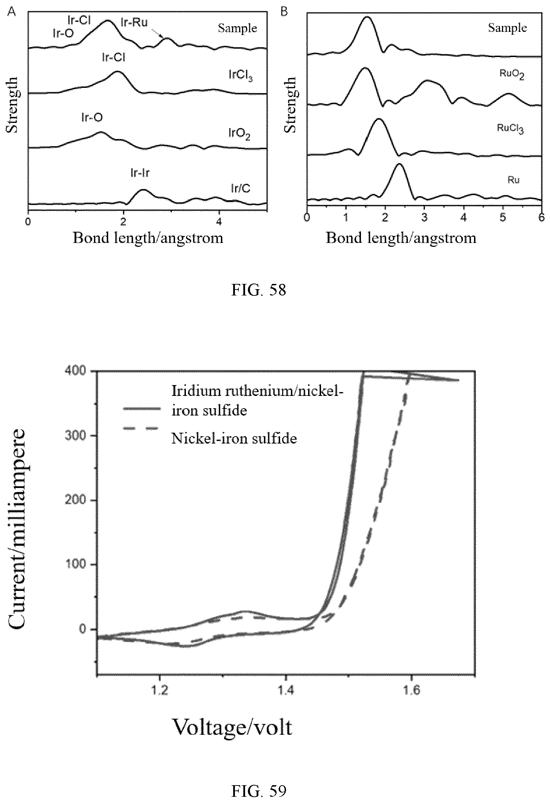

Scanning transmission electron microscopy was used to characterize the distribution condition of Ru and Ir, as shown in FIG. 57, to indicate that Ru and Ir were uniformly distributed on a surface of nickel-iron sulfide in a single atom form respectively. Synchrotron radiation was used to characterize a local coordination environment of Ru and Ir, and the results were as shown in FIG. 58. It may be concluded from FIG. 58a that Ir was co-coordinated by oxygen and chlorine, while it may be concluded from FIG. 58b that Ru was coordinated by oxygen. In combination with the analysis of two figures 58a-58b, it may be concluded that Ru and Ir have a strong interaction, which is different from a simple combination of Ir and Ru.

### Application Example 20

### 1. Electrolyzing seawater oxygen evolution performance

Electrolyzing seawater oxygen evolution performance of the material obtained in Embodiment 20 was tested under a three-electrode testing system:
a reference electrode was a saturated calomel electrode, a counter electrode was a platinum electrode, a working electrode was the iridium ruthenium/nickel-iron sulfide material prepared in Embodiment 20 or the nickel-iron sulfide material obtained from step (2) in Embodiment 20, a voltage range was from 0 V to 1 V, and an electrolyte solution was a mixed solution of 6.0 M sodium hydroxide and 2.8 M sodium chloride to characterize electrolyzing seawater oxygen evolution performance of the material.

FIG. 59 is hydrogen evolution polarization curve diagrams of the iridium ruthenium/nickel-iron sulfide and nickel-iron sulfide materials in Application Example 20 in the 6 mol/L NaOH+2.8 mol/L NaCl solution.

It may be seen from FIG. 59 that the obtained iridium ruthenium/nickel-iron sulfide material has the good electrolyzed water oxygen evolution performance (with a peak potential of 1.475 V), and its electrolyzed water oxygen evolution performance is better than that of the nickel-iron sulfide material (with a peak potential of 1.512 V).

### 2. Electrolyzing seawater hydrogen evolution performance

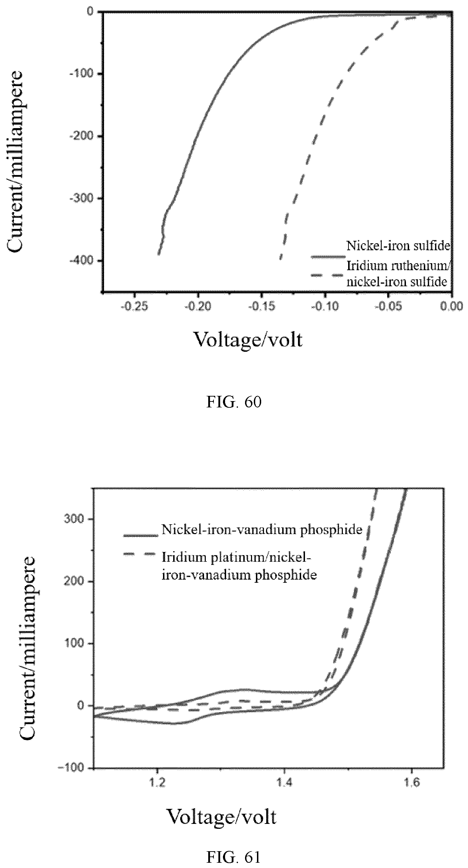

Electrolyzing seawater hydrogen evolution performance of the material obtained in Embodiment 20 was tested under a three-electrode testing system:
a reference electrode was a saturated calomel electrode, a counter electrode was a platinum electrode, a working electrode was the iridium ruthenium/nickel-iron sulfide material prepared in Embodiment 20 or the nickel-iron sulfide material obtained from step (2) in Embodiment 20, a voltage range was from -1 V to -2 V, an electrolyte solution was 6.0 M sodium hydroxide and 2.8 M sodium chloride to characterize cathodic hydrogen evolution performance of electrolyzing seawater of the material, and the obtained testing result was as shown in FIG. 60.

It may be concluded from FIG. 60 that the iridium ruthenium/nickel-iron sulfide material simultaneously has the good cathodic hydrogen evolution performance, specifically manifested as a hydrogen evolution peak potential of about 32.6 mV of the iridium ruthenium/nickel-iron sulfide material and a peak potential of about 116 mV of the nickel-iron sulfide material. The single atom distribution of iridium-ruthenium double noble metals advances the peak potential for hydrogen evolution by about 84 mV, and thus is proven to be beneficial for improving the catalytic activity of a hydrogen evolution reaction.

### Embodiment 21-Double noble metal loading-Chemical deposition method

A preparation method of a nanomaterial (iridium platinum/nickel-iron-vanadium phosphide) with noble metal single atoms dispersed on a surface of a non-noble metal substrate adopts a chemical deposition method described in the second aspect of the present invention, which is specifically as follows:
step (1) a non-noble metal substrate-nickel-iron-vanadium bimetallic hydroxide nanosheet was prepared:
preparation of 40 mL of an alkali liquor A: 40 mL of the alkali liquor A was prepared by using 0.48 g of sodium hydroxide and 0.106 g of sodium carbonate with an appropriate amount of deionized water; and
preparation of 40 mL of a salt solution B: 40 mL of the salt solution B was prepared by using 0.291 g of nickel nitrate, 0.096 g of vanadium chloride, and 0.202 g of ferric nitrate with an appropriate amount of deionized water.

The solution A and the solution B were simultaneously dropped to 40 ml of water under high-speed stirring, and pH was maintained at about 8.5 until the dropwise addition of the salt solution B was completed; and stirring was continued for 12 hours, centrifuging was performed to obtain precipitates, and the precipitates were washed with deionized water and ethyl alcohol for three times each, and dried in vacuum at 60°C to obtain a nickel-iron-vanadium hydroxide nanosheet.

Step (2) a phosphide nanomaterial was prepared:
a nickel iron vanadium hydroxide obtained in step (1) and 300 mg of sodium hypophosphite were placed together in a tube furnace, heated up to 300°C, and subjected to heat preservation for 1 hour, and phosphating was performed to obtain a nickel-iron-vanadium phosphide material. The obtained material was used for depositing single atoms in next step.

Step (3) a double noble metal single atom material was prepared:
1 g of the nickel-iron-vanadium phosphide nanosheet obtained in step (2) was weighed, 30 mL of deionized water was added, and ultrasound was performed for 2-3 hours until the nanosheet was evenly distributed in the water. Preparation of 20 mL of an alkaline dilute solution of iridium chloride and chloroplatinic acid: 20 mL of the alkaline dilute solution of iridium chloride was prepared by using 5 mg of iridium chloride, 2 mg of chloroplatinic acid, 0.4 mg (0.5 mmol/L) of sodium hydroxide, and deionized water. Then, under a high-speed stirring condition (500 R/min), the above alkaline dilute solution was dropped into uniformly dispersed nickel-iron-vanadium phosphide, with a drop rate of 5 drops/minute. After dropwise adding, stirring was continued under a heating condition at 95°C for 4 hours, centrifugation was performed to obtain precipitates, and the precipitates were washed with water and ethyl alcohol for three times each, and dried in vacuum at 60°C to obtain a nanomaterial (iridium platinum/nickel-iron-vanadium phosphide) with double single atoms of iridium and platinum loaded on the nickel-iron-vanadium phosphide.

### Application Example 21

### 1. Electrolyzing seawater oxygen evolution performance

Electrolyzing seawater oxygen evolution performance of the material obtained in Embodiment 21 was tested under a three-electrode testing system:
a reference electrode was a saturated calomel electrode, a counter electrode was a platinum electrode, a working electrode was the iridium platinum/nickel-iron-vanadium phosphide material prepared in Embodiment 21 or the nickel-iron-vanadium phosphide material obtained from step (2) in Embodiment 21, a voltage range was from 0 V to 1 V, and an electrolyte solution was 6.0 M sodium hydroxide and 2.8 M sodium chloride to characterize electrolyzing seawater oxygen evolution performance of the material.

FIG. 61 is oxygen evolution polarization curve diagrams of the iridium platinum/nickel-iron-vanadium phosphide material and the nickel-iron-vanadium phosphide material in Application Example 21 in the 6 mol/L NaOH+2.8 mol/L NaCl solution.

It may be seen from FIG. 61 that the obtained iridium platinum/nickel-iron-vanadium phosphide material has the good electrolyzed water oxygen evolution performance (with a peak potential of 1.488 V), and its electrolyzed water oxygen evolution performance is better than that of the nickel-iron-vanadium phosphide material (with a peak potential of 1.528 V).

### 2. Electrolyzing seawater hydrogen evolution performance

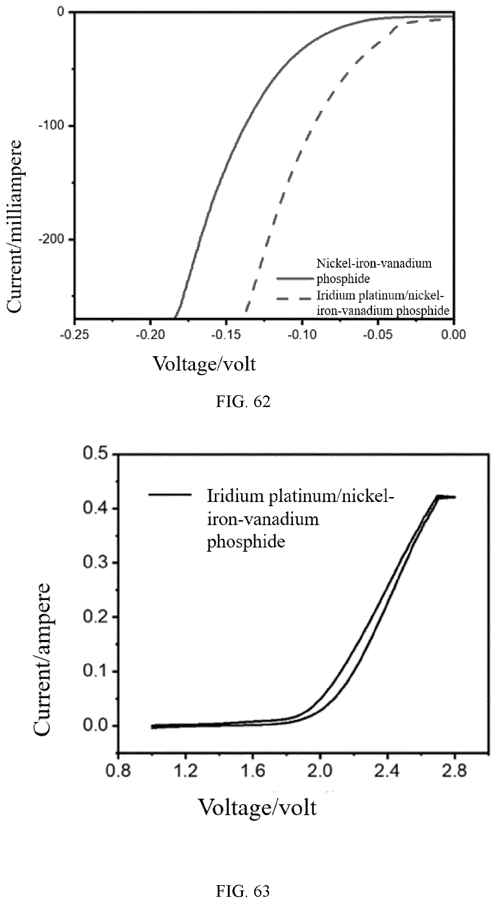

Electrolyzing seawater hydrogen evolution performance of the material obtained in Embodiment 21 was tested under a three-electrode testing system:
a reference electrode was a saturated calomel electrode, a counter electrode was a platinum electrode, a working electrode was the iridium platinum/nickel-iron-vanadium phosphide material prepared in Embodiment 21 or the nickel-iron-vanadium phosphide material obtained from step (2) in Embodiment 21, a voltage range was from -1 V to -2 V, an electrolyte solution was 6.0 M sodium hydroxide and 2.8 M sodium chloride to characterize cathodic hydrogen evolution performance of electrolyzing seawater of the material, and the obtained testing result was as shown in FIG. 62.

It may be concluded from FIG. 62 that the iridium platinum/nickel-iron-vanadium phosphide material simultaneously has the good cathodic hydrogen evolution performance, specifically manifested as that a potential required for hydrogen evolution of the iridium platinum/nickel-iron-vanadium phosphide material to reach a current density of 10 mA/square centimeter is about 33.4 mV, and a potential required for hydrogen evolution of the nickel-iron-vanadium phosphide material to reach a current density of 10 mA/square centimeter is about 66.7 mV. The single atom distribution of iridium-platinum double noble metals advances the peak potential for hydrogen evolution by about 33 mV, and thus is proven to be beneficial for improving the catalytic activity of a hydrogen evolution reaction.

FIG. 63 is polarization curves of dual-function full electrolyzed water of the iridium platinum/nickel-iron-vanadium phosphide material prepared in Embodiment 21 as both a cathode and an anode. A voltage required to reach a current density of 400 mA/square centimeter is only about 2.55 V, indicating excellent performance. This proves that the material of the present invention may be used as both the cathode and the anode simultaneously.

### Embodiment 22-Chemical deposition method

A preparation method of a nanomaterial (ruthenium/nickel iron (2+) iron hydrotalcite) with ruthenium single atoms dispersed on a surface of divalent iron doped nickel iron hydrotalcite is specifically as follows:
step (1) a divalent iron doped nickel iron hydrotalcite nanomaterial (a nickel iron (2+) iron hydrotalcite nanosheet) was prepared:
nitrogen was introduced into water for 30 minutes to remove dissolved oxygen in the water, a nitrogen flow rate was controlled to be 200 mL/min, and a mixture was supplied to the following steps after saturation;
preparation of 40 mL of an alkali liquor A: 40 mL of the alkali liquor A was prepared by using 0.40 g of sodium hydroxide (10 mmol) and 0.106 g of sodium carbonate (1 mmol) with an appropriate amount of deionized water; and
preparation of 40 mL of a salt solution B: 40 mL of the salt solution B was prepared by using 0.162 g (1 mmol) of ferric chloride, 0.126 g (1 mmol) of ferrous chloride, and 0.129 g (1 mmol) of nickel chloride with an appropriate amount of deionized water.

Under nitrogen protection, the solution A and the solution B were simultaneously dropped to 40 ml of water under high-speed stirring, and pH was maintained at about 8.5 until the dropwise addition of the salt solution B was completed; and stirring was continued for 12 hours, centrifuging was performed to obtain precipitates, and the precipitates were washed with deionized water obtained after the dissolved oxygen was removed and ethyl alcohol for three times each, and dried in vacuum at 60°C to obtain the nickel iron (2+) iron hydrotalcite nanosheet.

Step (2) a nanomaterial was prepared:
after the dissolved oxygen in the water was removed, 1 g of the nickel iron (2+) iron hydrotalcite nanosheet obtained in step (1) was weighed, 30 mL of deionized water was added, and ultrasound was performed for 2-3 hours until the nanosheet was evenly distributed in the water. Preparation of 10 mL of a dilute solution of ruthenium chloride: 10 mL of the dilute solution of ruthenium chloride was prepared by using 5 mg (a concentration of ruthenium was 2.22 mmol/L) of ruthenium chloride, and deionized water. Then, under the nitrogen protection and under a high-speed stirring condition (500 R/min), the above ruthenium chloride solution was dropped into uniformly dispersed nickel iron (2+) iron hydrotalcite. After dropwise adding, stirring was continued under a heating condition at 20°C for 6 hours, centrifugation was performed to obtain precipitates, and the precipitates were washed with water and ethyl alcohol for three times each, and dried in vacuum at 60°C to obtain the ruthenium/nickel iron (2+) iron hydrotalcite.

The above operations have all eliminated the influence of oxygen.

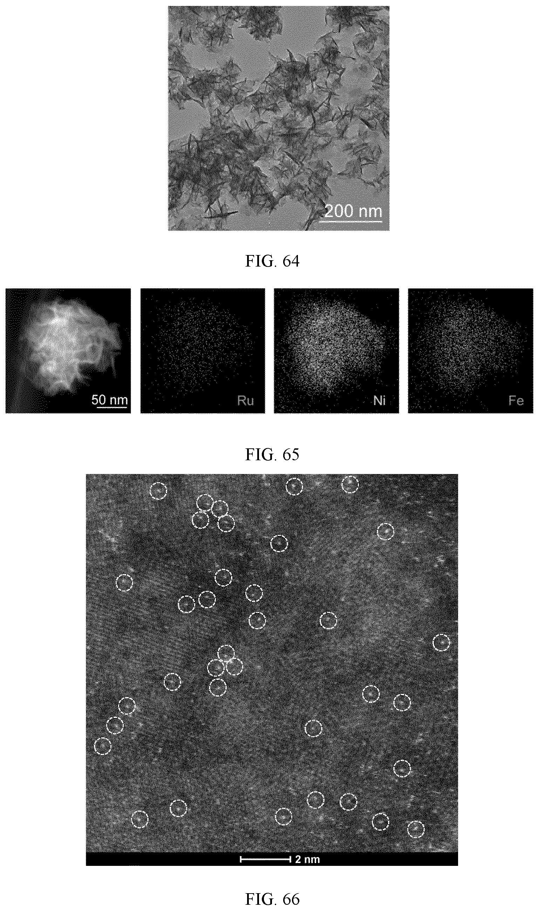

Reference is made to FIG. 64 for a transmission electron microscopy of the obtained ruthenium/nickel iron (2+) iron hydrotalcite. It may be seen from FIG. 64 that the ruthenium/nickel iron (2+) iron hydrotalcite is a hexagonal plate with a diameter of 50-100 nanometers and a thickness of 5-10 nanometers, and has a smooth surface without obvious particles.

Reference is made to FIG. 65 for element distribution of the obtained ruthenium/nickel iron (2+) iron hydrotalcite, and reference is made to FIG. 66 for its scanning transmission electron microscopy. It may be seen from FIG. 65 that the elements in the material are uniformly distributed, and it may be seen in conjunction with the scanning transmission electron microscopy in FIG. 66 that noble metal ruthenium is highly dispersed on the surface of the nickel iron (2+) iron hydrotalcite in a single atom form.

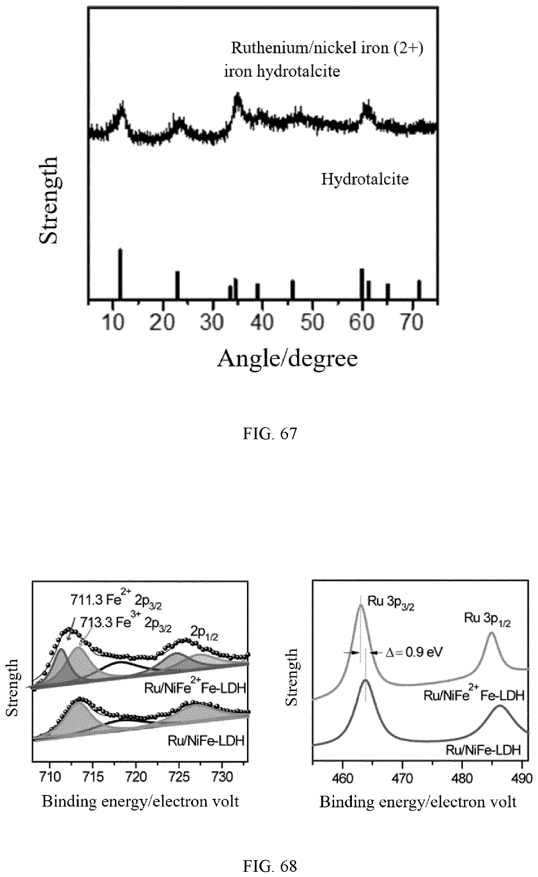

Reference is made to FIG. 67 for an XRD spectrum of the obtained ruthenium/nickel iron (2+) iron hydrotalcite. It may be seen that a diffraction peak was consistent with the hydrotalcite (referred to as LDH in the figure), indicating that ruthenium was not crystallized into ruthenium oxide or elemental ruthenium in the synthesis process. The single atom surface of the noble metal is coordinated with chlorine and oxygen simultaneously. Moreover, the single atoms of the noble metal are selectively anchored above divalent iron ions.

Reference is made to FIG. 68 for an X-ray photoelectron spectroscopy (XPS) result of the obtained material. It may be seen from the figure that divalent iron is successfully introduced, and a valence state of single atom Ru is reduced while the divalent iron is introduced.

Inductively coupled plasma emission spectroscopy testing was performed on the ruthenium/nickel iron (2+) iron hydrotalcite, and the results showed that a mass fraction of ruthenium in this material was 1.36%, based on the total mass of this material.

### Application Example 22

### Electrolyzed water performance testing

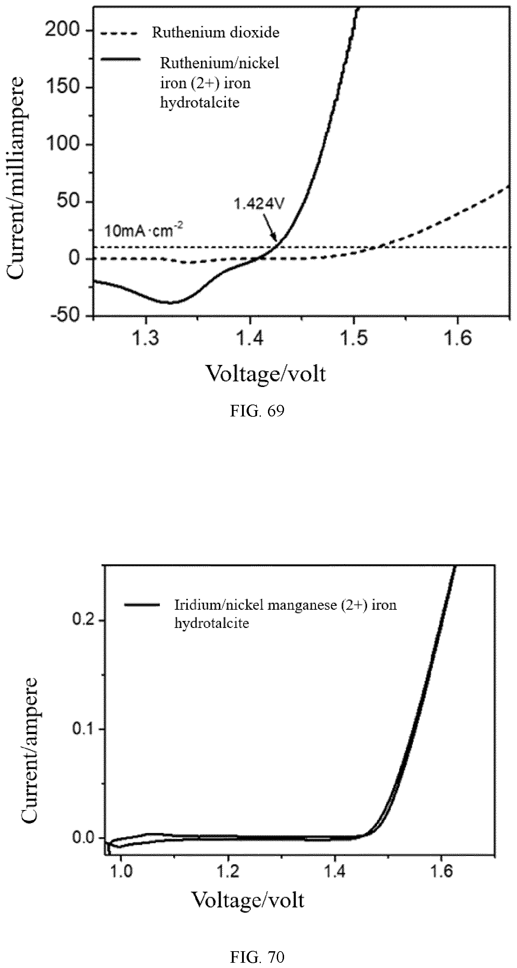

Electrolyzed water oxygen evolution performance of the ruthenium/nickel iron (2+) iron hydrotalcite obtained in Embodiment 22 of the present invention was tested using a three-electrode system: a reference electrode was a saturated calomel electrode, a counter electrode was a platinum electrode, and a working electrode was the ruthenium/nickel iron (2+) iron hydrotalcite obtained in Embodiment 22. Testing was performed in a 1.0 M potassium hydroxide solution, and polarization curves obtained were as shown in FIG. 69.

It may be seen from FIG. 69 that for the ruthenium/nickel iron (2+) iron hydrotalcite, under a condition of a current density of 10 mA/square centimeter, the required potential is only 1.424 V, which is nearly 300 mV smaller than that of commercially available ruthenium dioxide.

### Embodiment 23-Chemical deposition method

A preparation method of a nanomaterial (iridium/nickel manganese (2+) iron hydrotalcite) with iridium single atoms dispersed on a surface of divalent manganese doped nickel iron hydrotalcite is specifically as follows:
step (1) a divalent manganese doped nickel iron hydrotalcite nanomaterial (a nickel manganese (2+) iron hydrotalcite nanosheet) was prepared:
nitrogen was introduced into water for 30 minutes to remove dissolved oxygen in the water, a nitrogen flow rate was controlled to be 200 mL/min, and a mixture was supplied to the following steps after saturation;
preparation of 40 mL of an alkali liquor A: 40 mL of the alkali liquor A was prepared by using 0.40 g of sodium hydroxide (10 mmol) and 0.106 g of sodium carbonate (1 mmol) with an appropriate amount of deionized water; and
preparation of 40 mL of a salt solution B: 40 mL of the salt solution B was prepared by using 0.162 g (1 mmol) of ferric chloride, 0.125 g (1 mmol) of manganese dichloride, and 0.129 g (1 mmol) of nickel chloride with an appropriate amount of deionized water.

Under nitrogen protection, the solution A and the solution B were simultaneously dropped to 40 ml of water under high-speed stirring, and pH was maintained at about 8.5 until the dropwise addition of the salt solution B was completed; and stirring was continued for 12 hours, centrifuging was performed to obtain precipitates, and the precipitates were washed with deionized water obtained after the dissolved oxygen was removed and ethyl alcohol for three times each, and dried in vacuum at 60°C to obtain the nickel manganese (2+) iron hydrotalcite nanosheet.

Step (2) a nanomaterial was prepared:
after boiling to remove the dissolved oxygen in the water, 0.5 g of the nickel manganese (2+) iron hydrotalcite nanosheet obtained in step (1) was weighed, 30 mL of deionized water was added, and ultrasound was performed for 2-3 hours until the nanosheet was evenly distributed in the water. Preparation of 1 mL of a dilute solution of iridium chloride: 1 mL of the dilute solution of iridium chloride (a concentration of iridium was 100 mmol/L) was prepared by using 31.6 mg of iridium chloride, and deionized water. Then, under the nitrogen protection and under a high-speed stirring condition (500 R/min), the above iridium chloride solution was dropped into uniformly dispersed nickel manganese (2+) iron hydrotalcite. After dropwise adding, stirring was continued under a condition at -4°C for 24 hours, centrifugation was performed to obtain precipitates, and the precipitates were washed with water and ethyl alcohol for three times each, and dried in vacuum at 60°C to obtain the iridium/nickel manganese (2+) iron hydrotalcite.

### Application Example 23

Electrolyzed water oxygen evolution performance of the iridium/nickel manganese (2+) iron hydrotalcite in Embodiment 23 of the present invention was tested using a three-electrode system: a reference electrode was a saturated calomel electrode, a counter electrode was a platinum electrode, and a working electrode was the iridium/nickel manganese (2+) iron hydrotalcite material obtained in Embodiment 23. Testing was performed in a mixed solution of 1.0 M sodium hydroxide and 0.5 M sodium chloride, and a polarization curve obtained was as shown in FIG. 70.

It may be seen from FIG. 70 that for the iridium/nickel manganese (2+) iron hydrotalcite material, under a condition of a current density of 10 mA/square centimeter, the required potential is only 1.447, indicating good performance.

### Embodiment 24-Electrochemical deposition method

Step (1) a nickel cobalt iron hydroxide array was prepared:
0.6 g of urea, 0.291 g of nickel nitrate, 0.291 g of cobalt nitrate, 0.266 g of ferric nitrate, 0.037 g of ammonium fluoride and deionized water were prepared into 36 mL of a solution, the solution was poured into 40 mL of a reactor, washed foam nickel with a size of 3*4 cm² was soaked into the solution, the solution was put into an oven, a reaction temperature was 100°C, the time was 12 hours, hydrothermal and crystallization were performed, and the obtained material was washed with water and ethyl alcohol for three times each, and dried in vacuum at 60°C for 10 hours to obtain foam nickel loaded with a nickel cobalt iron hydroxide (the nickel cobalt iron hydroxide array).

Step (2) the nickel cobalt iron hydroxide obtained in step (1) and 600 mg of sodium hypophosphite were placed together in a tube furnace, heated up to 300°C, and subjected to heat preservation for 2 hours, and phosphating was performed to obtain a nickel-cobalt-iron phosphide material. The obtained material was used for electrodeposition of single atoms.

Step (3) 50 mL of an electrolyte solution was prepared: 50 mL of the electrolyte solution was prepared by mixing 2.0 g of sodium hydroxide and 2.6 mg of chloroplatinic acid with an appropriate amount of water.

Step (4) electrodeposition was performed: a three-electrode system was used in the electrolyte solution obtained in step (3), the nickel-cobalt-iron phosphide material obtained in step (2) was a working electrode, a saturated calomel electrode was a reference electrode, a carbon rod was a counter electrode, a linear voltammetry was used, and parameters were: a voltage range was from 0.3 V to 0.6 V, a scanning direction was forward, a scanning speed was 0.005 V/s, and the number of cycles was 5. The obtained material was washed with water and ethyl alcohol for three times each, and dried in vacuum at 60°C for 10 hours to obtain a platinum/nickel-cobalt-iron phosphide material.

### Application Example 24

### 1. Electrolyzed water hydrogen evolution performance

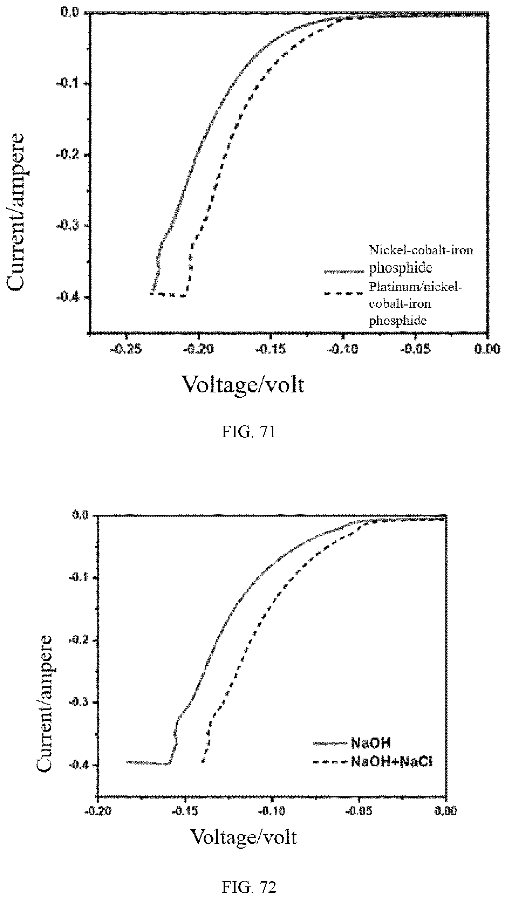

Electrolyzed water hydrogen evolution performance of the material obtained in Embodiment 24 was tested under a three-electrode testing system:
a reference electrode was a saturated calomel electrode, a counter electrode was a platinum electrode, a working electrode was the platinum/nickel-cobalt-iron phosphide material prepared in Embodiment 24 or the nickel-cobalt-iron phosphide material obtained from step (2) in Embodiment 24, a voltage range was from **-1** V to -2 V, an electrolyte solution was 6 M sodium hydroxide to characterize cathodic hydrogen evolution performance of electrolyzed water of the material, and the obtained testing result was as shown in FIG. 71.

It may be concluded from FIG. 71 that the platinum/nickel-cobalt-iron phosphide material simultaneously has the good cathodic hydrogen evolution performance, specifically manifested as that a potential required for hydrogen evolution of the platinum/nickel-cobalt-iron phosphide material to reach a current density of 10 mA/square centimeter is about 49.6 mV, and a potential required for hydrogen evolution of the nickel-cobalt-iron phosphide material to reach a current density of 10 mA/square centimeter is about 111.7 mV. Platinum single atom loading advances the peak potential for hydrogen evolution by about 62.1 mV, indicating that platinum single atoms are beneficial for improving the catalytic activity of hydrogen evolution reactions.

### 2. Electrolyzing seawater hydrogen evolution performance

Referring to the first aspect of Application Example 24, under the same three-electrode testing system, sodium chloride was added to an electrolyte solution, that is, the electrolyte solution was changed to 6.0 M sodium hydroxide and 2.8 M sodium chloride, a working electrode was the platinum/nickel-cobalt-iron phosphide material obtained in Embodiment 24, and the polarization curves obtained were as shown in FIG. 72. It may be seen from FIG. 72 that for the platinum/nickel-cobalt-iron phosphide material, the hydrogen evolution performance after adding chloride ions was better than that when testing in sodium hydroxide, and a potential required to reach a current density of 100 mA/square centimeter is reduced by about 20 mV (when testing in sodium hydroxide, a potential required to reach a current density of 100 mA/square centimeter is about 108.3 mV; and when testing in sodium hydroxide and sodium chloride, a potential required to reach a current density of 100 mA/square centimeter is about 88.1 mV).

### 3. Influence of iodine on hydrogen evolution performance

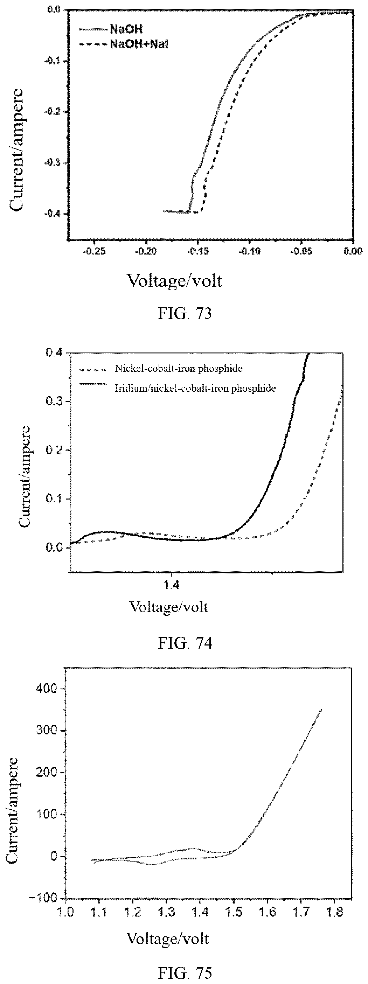

Referring to the first aspect of Application Example 24, under the same three-electrode testing system, sodium iodide was added to an electrolyte solution, that is, the electrolyte solution was changed to a mixed solution of 6.0 M sodium hydroxide and 2.0 M sodium iodide, a working electrode was the platinum/nickel-cobalt-iron phosphide material obtained in Embodiment 24, and the polarization curves obtained were as shown in FIG. 73.

It may be concluded from FIG. 73 that adding fluoride ions to a testing solution may reduce the potential of platinum/nickel-cobalt-iron phosphide required to reach a current density of 100 mA/square centimeter to 96.7 mV, which is beneficial for the material to catalyze hydrolysis and oxygen evolution, and indicates that the coordination of iodine ions in the electrolysis process is beneficial for improving electrolytic performance of the material.

### Embodiment 25-Electrochemical deposition method

Referring to the method in Embodiment 24, a nickel-cobalt-iron phosphide material was synthesized according to the method in steps (1) and (2); and
step (3) was changed to preparation of 50 mL of an electrolyte solution: 50 mL of the electrolyte solution was prepared by mixing 20.0 g of sodium hydroxide, 2 g of sodium sulfate and 0.203 g (10 mmol/L) of chloroiridic acid with an appropriate amount of water. An iridium/nickel-cobalt-iron phosphide material was finally obtained.

### Application Example 25

### 1. Electrolyzing seawater oxygen evolution reaction

Electrolyzing seawater oxygen evolution performance of the material obtained in Embodiment 25 was tested under a three-electrode testing system:
a reference electrode was a saturated calomel electrode, a counter electrode was a platinum electrode, a working electrode was the iridium/nickel-cobalt-iron phosphide material prepared in Embodiment 25 or the nickel-cobalt-iron phosphide material obtained from step (2) in Embodiment 25, a voltage range was from 0 V to -1 V, an electrolyte solution was 6 M sodium hydroxide and 2.8 M sodium chloride to characterize cathodic oxygen evolution performance of electrolyzed water of the material, and the obtained testing result was as shown in FIG. 74. A voltage required for oxygen evolution of the iridium/nickel-cobalt-iron phosphide material to reach a current density of 100 mA/square centimeter is about 1.49 V, and a voltage required for hydrogen evolution of the nickel-cobalt-iron phosphide material to reach a current density of 100 mA/square centimeter is about 1.53 V. Iridium single atom loading advances the peak potential for hydrogen evolution by about 40 mV, indicating that iridium single atoms are beneficial for improving the catalytic activity of oxygen evolution reactions.

### 2. Two-electrode Electrolyzing seawater

Electrolyzing seawater hydrogen production performance of the material obtained in Embodiment 25 was tested under a two-electrode testing system:
an anode was the iridium/nickel-cobalt-iron phosphide material prepared in Embodiment 25, and a cathode was the platinum/nickel-cobalt-iron phosphide material prepared in Embodiment 24. Polarization curves of electrolyzing seawater hydrogen evolution of the two electrodes were as shown in FIG. 75, and an overpotential required to reach 100 mA/square centimeter was only 358 mV, indicating that the material also has ultra-high performance in a two-electrode electrolyzing seawater system.

## Claims

1. A nanomaterial with noble metal single atoms dispersed on a surface of a non-noble metal substrate, **characterized in that** the nanomaterial comprises: a non-noble metal substrate and noble metal in single atom dispersion on a surface of the non-noble metal substrate; and the single atoms of the noble metal are coordinated with halogen and oxygen simultaneously.

2. The nanomaterial with the noble metal single atoms dispersed on the surface of the non-noble metal substrate according to claim 1, **characterized in that** the halogen is selected from: one or more of chlorine, bromine, fluorine, and iodine.

3. The nanomaterial with the noble metal single atoms dispersed on the surface of the non-noble metal substrate according to claim 1, **characterized in that** the noble metal is selected from: one or more of iridium, ruthenium, gold, platinum, rhodium, palladium, silver, and osmium; and
the oxygen coordinated on the surfaces of the single atoms of the noble metal exists in a form of an oxygen-containing functional group.

4. The nanomaterial with the noble metal single atoms dispersed on the surface of the non-noble metal substrate according to claim 1, **characterized in that** the non-noble metal substrate is selected from: one or more of non-noble metal hydroxide, non-noble metal oxide, non-noble metal sulfide, non-noble metal phosphide, and non-noble metal selenide.

5. The nanomaterial with the noble metal single atoms dispersed on the surface of the non-noble metal substrate according to claim 1, **characterized in that** non-noble metal in the non-noble metal substrate is selected from: one or more of iron, cobalt, nickel, aluminum, manganese, cerium, vanadium, zinc, copper, strontium, indium, and cadmium.

6. The nanomaterial with the noble metal single atoms dispersed on the surface of the non-noble metal substrate according to claim 1, **characterized in that** the nanomateria l further comprises a conductive carrier, and the non-noble metal substrate is loaded on the conductive carrier.

7. The nanomaterial with the noble metal single atoms dispersed on the surface of the non-noble metal substrate according to claim 1, **characterized in that** the non-noble metal substrate is internally doped with reducing metal ions.

8. A preparation method of the nanomaterial with the noble metal single atoms dispersed on the surface of the non-noble metal substrate according to claim 1, **characterized in that** the preparation method is a chemical precipitation method, and comprises:
dispersing a non-noble metal substrate in water, dropwise adding a dilute solution of a water-soluble noble metal precursor and base thereto to obtain a mixed solution, reacting same for 4-120 hours at 10-95°C while stirring, performing solid-liquid separation, washing solid, and drying to obtain the nanomaterial, wherein
in the dilute solution of the water-soluble noble metal precursor and the base, a concentration of the water-soluble noble metal precursor is in a range from 0.001 mmol/L to 200 mmol/L, a concentration of a hydroxide ion is in a range from 0.5 mmol/L to 1000 mmol/L, and the water-soluble noble metal precursor contains halogen element.

9. The preparation method of the nanomaterial with the noble metal single atoms dispersed on the surface of the non-noble metal substrate according to claim 8, **characterized in that** when the non-noble metal substrate is non-noble metal hydroxide, a preparation method thereof is as follows: mixingan alkali liquor and a water-soluble non-noble metal precursor solution to co-precipitate, performing crystallization and solid-liquid separation, and drying solid to obtain the non-noble metal hydroxide;
when the non-noble metal substrate is non-noble metal oxide, a preparation method thereof is as follows: directly calcining a non-noble metal hydroxide to obtain the non-noble metal oxide; and
when the non-noble metal substrate is non-noble metal sulfide, non-noble metal phosphide or non-noble metal selenide, a preparation method thereof is selected from any one of the following two methods:
method 1: respectively placing a non-noble metal hydroxide in a sulfur-containing substance solution, a selenium-containing substance solution or a phosphorus-containing substance solution and perform hydrothermal reaction to obtain the corresponding non-noble metal sulfide, non-noble metal selenide or non-noble metal phosphide; or
method 2: simultaneously placing a non-noble metal hydroxide with a sulphur-containing substance, a selenium-containing substance or a phosphorus-containing substance respectively in a tube furnace for calcination to obtain the corresponding non-noble metal sulfide, non-noble metal selenide or non-noble metal phosphide.

10. The preparation method of the nanomaterial with the noble metal single atoms dispersed on the surface of the non-noble metal substrate according to claim 6, **characterized in that** the preparation method is an electrodeposition method, and comprises:
preparing an electrolyte solution containing a water-soluble noble metal precursor and base, and performing electrochemical deposition by using a conductive carrier loaded with a non-noble metal substrate as a working electrode, an electrodeposition voltage being in a range from -1.2 V to 1.2 V, wherein
in the electrolyte solution, a concentration of the water-soluble noble metal precursor is in a range from 0.001 mmol/L to 1000 mmol/L, a concentration of a hydroxide ion is in a range from 0.1 mol/L to 6 mol/L, and the water-soluble noble metal precursor contains halogen element;
preferably, the water-soluble noble metal precursor and the base are prepared into the electrolyte solution;
preferably, the conductive carrier loaded with the non-noble metal substrate is combined with a carbon rod and a reference electrode to form a three-electrode system; and
preferably, in the electrolyte solution, a concentration of the water-soluble noble metal precursor is in a range from 0.001 mmol/L to 10 mmol/L.

11. The preparation method of the nanomaterial with the noble metal single atoms dispersed on the surface of the non-noble metal substrate according to claim 10, **characterized in that** a preparation method of the conductive carrier loaded with the non-noble metal substrate is as follows:
when the non-noble metal substrate is non-noble metal hydroxide, a preparation method thereof is as follows: mixing the conductive carrier, urea and a water-soluble non-noble metal precursor solution and performing hydrothermal reaction, crystallization, washing and drying to obtain a conductive carrier loaded with non-noble metal hydroxide; or using an electrodeposition method to prepare the conductive carrier loaded with non-noble metal hydroxide;
when the non-noble metal substrate is non-noble metal oxide, a preparation method thereof is as follows: directly calcining the conductive carrier loaded with non-noble metal hydroxide to obtain the conductive carrier loaded with non-noble metal oxide; and
when the non-noble metal substrate is non-noble metal sulfide, non-noble metal phosphide or non-noble metal selenide, a preparation method thereof is selected from any one of the following two methods:
method 1: respectively mixing the conductive carrier loaded with non-noble metal hydroxide in a sulfur-containing substance solution, a selenium-containing substance solution or a phosphorus-containing substance solution and performing hydrothermal reaction then performing calcination to obtain a corresponding conductive carrier loaded with non-noble metal sulfide, conductive carrier loaded with non-noble metal selenide or conductive carrier loaded with non-noble metal phosphide; and
method 2: simultaneously placing the conductive carrier loaded with non-noble metal hydroxide with a sulphur-containing substance, a selenium-containing substance or a phosphorus-containing substance respectively in a tube furnace for calcination to obtain a corresponding conductive carrier loaded with non-noble metal sulfide, conductive carrier loaded with non-noble metal selenide or conductive carrier loaded with non-noble metal phosphide.

12. The preparation method according to claim 8 or 10, **characterized in that** when the non-noble metal substrate is internally doped with reducing metal ions, in the preparation method, dissolved oxygen in the water or the electrolyte solution needs to be eliminated in advance.

13. Use of the nanomaterial according to any one of claims 1 to 7 as an electrode for electrolyzing water, **characterized in that** when electrolyzing water halide is added into an electrolyte solution to improve performance of the nanomaterial for electrolyzing water.

14. The use according to claim 13, **characterized in that** the performance comprises: activity, selectivity and stability.

15. The use according to claim 13, **characterized in that** the halide is selected from: one or more of chloride, bromide and fluoride.

16. The use according to claim 13, **characterized in that** the nanomaterial may serve as both an anode and a cathode for electrolyzing water.

17. Use of the nanomaterial according to any one of claims 1 to 7 as an electrode for electrolyzing seawater.

18. The use according to claim 17, **characterized in that** the nanomaterial may serve as both an anode and a cathode for electrolyzing seawater.
